# EUROPÄISCHE PATENTSCHRIFT

(11) **EP 1 343 326 B1**
(45) Veröffentlichungstag und Bekanntmachung des Hinweises auf die Patenterteilung: **08.09.2004**
(21) Anmeldenummer: 02005213.0
(22) Anmeldetag: 07.03.2002
(51) Int. Cl.: H04N 7/18, H04N 9/82, G08B 13/196

(54) **Überwachungssystem mit mehreren Videokameras**
Monitoring system with several video-cameras
Système de surveillance avec plusieurs caméras video

(43) Veröffentlichungstag der Anmeldung: 10.09.2003
(73) Patentinhaber: MacroSystem Digital Video AG, 58300 Wetter (DE)
(72) Erfinder: Döring, Jörg Dipl.-Ing,, 58313 Herdecke (DE); Sprave, Hartmut Dipl.-Phys., 61665 Alsbach-Hähnlein (DE)
(74) Vertreter: HOFFMANN - EITLE

(56) Entgegenhaltungen:
- GB-A- 2 238 926
- GB-A- 2 337 174
- US-A- 5 267 039
- US-A- 5 995 140

## Beschreibung

Die vorliegende Erfindung betrifft ein Überwachungssystem mit mehreren Videokameras.

Ein derartiges Überwachungssystem umfaßt in der Regel mehrere Kameras, eine Einrichtung zum Umschalten oder Multiplexen der Signale der jeweiligen Kameras, und ein Aufzeichnungsgerät zum Aufzeichnen der gemultiplexten Videosignale der Kameras auf ein Speichermedium, beispielsweise ein Magnetband oder eine Festplatte.

Ein zentrales Element dieser Systeme ist der Multiplexer. Erst durch dieses Gerät können die Videosignale der einzelnen Kameras von einem gemeinsamen Rekorder im Zeitmultiplex aufgezeichnet werden. Der Begriff Multiplexer bezeichnet eine Einrichtung, die dafür sorgt, dass jede angeschlossene Kamera für einen bestimmten Zeitraum auf die Aufzeichnungsvorrichtung durchgeschaltet wird, so dass Bilder einer Vielzahl von Kameras abwechselnd hintereinander jeweils mit einer reduzierten Bildrate aufgezeichnet werden können. Um eine Vielzahl von Kanälen für die Aufzeichnung und Wiedergabe der Bilder von den Kameras bereitzustellen, nimmt der Multiplexer also die Funktion eines Umschalters von einer Kamera auf die nächste wahr. Beim Multiplexen von Videosignalen in ein brauchbares gemultiplextes Signal ist zu bedenken, dass die von den einzelnen Kameras gelieferten Videosignale ein relativ komplexes Format aufweisen, welches neben der eigentlichen Bildinformation auch noch Synchronisationsinformation, sowie im Fall von Farbsignalen auch noch sogenannte Bursts für die Wiedergewinnung des Farbhilfsträgers umfassen.

Um diese Multiplexfunktion zu erfüllen, ist es denkbar, dass der Multiplexer die Videosignale der Kameras zunächst digitalisiert und sie in speziellen Halbbild- oder Vollbildspeichern speichert. Der Multiplexer liest diese Speicher dann der Reihe nach aus, um ein formatgerechtes gemultiplextes Videoausgangssignal zu erzeugen, welches die Bilder der Kameras in ständigem Wechsel (bis zur Vollbildfrequenz, 25 Hz in Europa, 30 Hz in den USA, oder sogar bis zur Halbbildfrequenz, d.h. 50 Hz bzw. 60 Hz) beinhaltet. Dieses Signal wird dann auf das Aufzeichnungsgerät gespielt. Jede Kamera erhält im nicht sichtbaren Bereich des Signals eine spezielle Codierung, die beim späteren Abspielen vom Aufzeichnungsgerät beim Demultiplexen der Bilder der jeweiligen Kameras verwendet werden kann. Der Demultiplexer erkennt die Kamerakennungen im Wiedergabesignal des Aufzeichnungsgerätes und kann die von den jeweiligen Kameras stammenden Bilder entsprechend sortieren, um eine Vielzahl von gedemultiplexten Videosignalen zurückzugewinnen.

Ein derart gedemultiplextes Videosignal zeigt dann das Bild einer einzelnen Kamera mit einer reduzierten Bildrate, da sich die angeschlossenen Kameras die Vollbildrate (25 Hz in Europa, 30 Hz in den USA) des aufgezeichneten Videosignals teilen müssen.

Ein solches System mit einem digitalen Multiplexer ist insofern vorteilhaft, dass durch die Verwendung von Bildspeichern keine besonderen Synchronisationsanforderungen an die Videosignale der Kameras gestellt werden müssen. Andererseits ist ein solcher Multiplexer teuer, denn er besteht aus einer Vielzahl von Funktionselementen: Das Videosignal jeder einzelnen Kamera muss decodiert, digitalisiert, mit der Kamerakennung versehen und in jeweilige Bildspeicher geschrieben werden, dann müssen die Speicher ausgelesen, die ausgelesene Information zusammengesetzt und in ein neues analoges Videosignal codiert werden, das sich zur Aufzeichnung durch einen Videorekorder eignet. Beim Abspielen der Daten durch den Rekorder wird der Prozess umgekehrt wiederholt.

Würde auf einen derartigen, digitalen Multiplexer verzichtet, wäre die Umschaltungsgeschwindigkeit von individuellen Kamerasignalen begrenzt, weil die Signale der Kameras nicht synchron sind. Ist die erste Kamera vielleicht gerade am Anfang eines Bildes, so ist die nächste vielleicht bereits am Ende und die dritte in der Mitte usw. Es dauert eine gewisse Zeit, bis das Signal der nächsten Kamera "gefangen" werden kann. Die zur Herstellung der Synchronisation erforderliche Fangzeit geht mit Bildstörungen einher,wie aus der Fernsehtechnik beim Umschalten der Programme bekannt ist. Dort dauert das Schalten von einem Kanal zum anderen einen wahrnehmbaren Sekundenbruchteil. Eine solche Fangzeit ist für ein System, welches die Vollbilder mehrerer Kameras gemultiplext aufzeichnet, unakzeptabel.

Aus JP 62281682 A ist ein Überwachungssystem bekannt, welches dazu dient, eine Vielzahl von Kameras der Reihe nach auf einen Überwachungsmonitor zu schalten, der die Videosignale der jeweiligen Kameras dann für ca. 60 s direkt anzeigt, bevor auf die nächste Kamera geschaltet wird. Die Kameras werden dabei mittels eines Vertikal-Rücksetzimpulses von einem Synchronisationssignalgenerator synchronisiert, und zwar derart, dass der Vertikal-Rücksetzimpuls für alle Kameras im Moment des Umschaltens auf die nächste Kamera erzeugt wird. Dadurch wird zwar die Fangzeit für den Monitor reduziert, jedoch ist das vom Umschalter ausgegebene Signal nicht geeignet für die Aufzeichnung auf einen üblichen Videorekorder. Im Umschaltmoment ergeben sich nämlich zeitliche Verschiebungen oder Verwerfungen zwischen dem Signal der bisherigen Kamera und dem durch den Vertikal-Rücksetzimpuls synchronisierten Signal der folgenden Kamera, die von einem üblichen Videorekorder aufgrund der Trägheit des rotierenden Videokopfes und des Bandtransportsystems nicht schnell genug synchronisiert werden können. Eine Aufzeichnung würde deshalb mit erheblichen Störungen im Umschaltmoment einhergehen. Wenn die Kameras mit höheren Umschaltfrequenzen, beispielsweise mit Vollbildfrequenz gemultiplext werden, würde dies die Häufigkeit von Störungen entsprechend erhöhen, was zur völligen Unbrauchbarkeit des erhaltenen Bildes führen kann.

Um derartige Störungen zu vermeiden, ist es denkbar, alle Kameras voll zu synchronisieren. Dazu ist es notwendig, ein Synchronisationssignal in jede einzelne Kamera einzuspeisen. Aus US 5,995,140 ist ein System bekannt, in welchem jede Kamera mittels Horizontal- und Vertikalsynchronisationssignalen synchronisiert wird. So genügt als Multiplexer ein einfacher analoger Umschalter, der Umschaltungen mit der Vollbildwechselfrequenz bewältigt. Will man jedoch Farbsignale übertragen und multiplexen, würde die aus dieser Druckschrift bekannte Lösung nicht ausreichen, denn die Horizontal- und Vertikalsynchronisationsimpulse erlauben nicht ohne weitere Maßnahmen die Herstellung eines bei allen Kameras synchronen Farbträgers. Um auch den Farbträger aller Kameras zu synchronisieren, kann für das Synchronisationssignal ein echtes Farb-Videosignal beispielsweise nach dem PAL oder NTSC Standard verwendet werden, welches nur schwarze Bildinformationen enthält (Black-Burst-Signal). Jede Kamera decodiert das Signal, extrahiert die Sync-Signale sowie den Farbhilfsträger und benutzt diese Signale, um ein neues Signal mit den neuen Bildinhalten zusammenzusetzen. Dieses Signal wird dann codiert und ausgegeben.

Diese vollsynchrone Lösung hat jedoch ebenfalls Nachteile. Die Kameras sind durch den Synchronisierungsteil recht teuer, und die Verkabelung muss um mindestens ein weiteres hochwertiges Videokabel für die relativ breitbandigen Synchronsignale pro Kamera erweitert werden. Hinzu kommt die Notwendigkeit eines aufwendigen Black-Burst-Generators, der das schwarze Videosignal erzeugt.

Demgemäß ist es eine Aufgabe der vorliegenden Erfindung, ein Überwachungssystem mit mehreren Videokameras anzugeben, welches mit begrenztem schaltungstechnischen Aufwand kostengünstig in der Lage ist, die Signale einer Vielzahl von Videokameras gemultiplext aufzuzeichnen.

Die vorliegende Erfindung ist in den Patentansprüchen angegeben. Die Unteransprüche betreffen vorteilhafte Ausgestaltungen der vorliegenden Erfindung.

Das erfindungsgemäße System arbeitet mit einem einfachen Umschalter als Multiplexer. Zur Synchronisation der Videokameras wird in einem bevorzugten Ausführungsbeispiel ausgenutzt, dass Videokameras auf Halbleitertechnik basieren können. Lichtempfindliche Speichervorrichtungen (CCD Bildwandler, Kondensatoren, Transistoren o.ä.) werden für eine kurze Zeit (der Belichtungszeit) dem durch das Objektiv einfallenden Licht ausgesetzt und dann Bildpunkt für Bildpunkt ausgelesen. Diese Bildinformation wird dann codiert und ausgegeben. Die zeitliche Steuerung übernimmt ein Zeitgebergenerator, üblicherweise in Form eines oder mehrerer hochintegrierter Schaltkreise (IC), der digital sowohl die Horizontal- und Vertikalzeitgabesignale für die Ansteuerung des Bildwandlers erzeugt, als auch für die Erzeugung der formatgerechten Videosignale mit Horizontal- und Vertikalimpulsen und - im Falle von Farbbildkameras gegebenenfalls auch mit den Bursts für die empfängerseitige Rückgewinnung des Farbhilfsträgers, zuständig ist.

Ein solcher digital arbeitender, bevorzugt quarzgesteuerter Kameraschaltkreis kann mittels eines externen Signals in einen wohldefinierten Ausgangszustand zurückgesetzt werden. Ein gleichzeitiges Zurücksetzen aller Kameras führt zu einem anfänglichen Parallellauf der Kameras, da alle Kameras gleichzeitig mit der Prozedur der Belichtung, Codierung etc. beginnen können. Bevorzugt wird eine einfache Reset-Leitung, die zu jeder Kamera führt, für die Synchronisierung der Kameras vorgesehen. Erst allmählich laufen die Signale der einzelnen Kameras zeitlich auseinander. Bevorzugt werden die Kameras mit einer Frequenz rückgesetzt, die annähernd der Periode des verwendeten Videosignalformates oder einem ganzzahligen Vielfachen davon entspricht, so dass ein neuer Rücksetzimpuls immer dann erzeugt wird, wenn eine Videosignalperiode ungefähr vollständig ist. Ein PAL Signal weist eine Periode von 8 Halbbildern auf, entsprechend 1/(6,25 Hz) oder vier Vollbildperioden. Ein NTSC Signal hat eine Periode von 4 Halbbildern, entsprechend 2/(30 Hz) oder zwei Vollbildperioden. Auch für Kameras, die Videosignale nach dem PAL Format erzeugen, wäre jedoch eine Rücksetzfrequenz von einer Vollbildperiode oder einem ganzzahligen Vielfachen davon geeignet.

Der Aufbau eines standardkonformen Videosignals ist recht komplex und erfordert im allgemeinen hohe zeitliche Genauigkeit. Bei Farbsignalen ist besonders die Phasenlage des Farbhilfsträgers üblicherweise kritisch, damit ein Empfangsschaltkreis (PLL) ihn erkennen und daraus den Farbhilfsträger rückgewinnen kann. In den Kameras arbeiten jedoch erfindungsgemäß übliche Taktoszillatoren, beispielsweise Schwingquarze, an deren Frequenzgenauigkeit und -stabilität keine strengeren Anforderungen als üblich gestellt werden müssen. Beispielsweise haben handelsübliche Quarze eine Toleranz von 20 ppm (=parts per million). Im PAL-System würden 20 ppm eine Abweichung von ca. 0,5% der Zeilendauer pro Halbbild und Phasenabweichungen beim Burst von bis zu mehreren Perioden der Farbhilfsträgerfrequenz ergeben. Natürlich sind andere Toleranzen, beispielsweise 50 ppm oder auch 10 ppm, für ein erfindungsgemäßes Videoüberwachungssystem ebenfalls einsetzbar.

Gemäß einem Ausführungsbeispiel der Erfindung ist eine Aufzeichnungsvorrichtung für das am Ausgang des Multiplexers bereitgestellte Videosignal vorgesehen, mit einem Videosignaldecoder, der gegenüber zeitlichen Versetzungen oder Sprüngen in dem aufzuzeichnenden Signal toleranter eingestellt ist als dies im PAL-System oder NTSC-System üblich ist. Diese erhöhte Toleranz kann beispielsweise dadurch erreicht werden, dass die Filterbandbreite in der für die Extraktion der Horizontalsynchronisation vorgesehenen PLL erhöht wird, oder lediglich ein zeitlich begrenztes Signalfenster von der bevorzugt digitalen PLL zum Rasten verwendet wird, das bevorzugt nicht größer ist als die Dauer der Rasterwechselimpulsfolge, auch Schwarzwechsel genannt, zwischen den jeweiligen Halbbildern. Durch diese Erhöhung der Toleranz gegenüber zeitlichen Versätzen außerhalb der Videosignalnorm, reicht die übliche Genauigkeit der Quarze der Kameras dann für eine Videosignalperiode oder sogar ein Vielfaches davon aus, bevor die Abweichungen zu groß dafür werden, von dem Eingangsschaltkreis des Videosignal-Aufzeichnungsgerätes ordnungsgemäß decodiert zu werden.

Gemäß einem bevorzugten Ausführungsbeispiel liefern die jeweiligen Kameras Farbvideosignale, beispielsweise nach der PAL oder NTSC Norm. Die Wiedergewinnung des Farbhilfsträgers aus dem gemultiplexten Videosignal geschieht bevorzugt schnell rastend in einem Videosignaldecoder in der Aufzeichnungseinrichtung, wobei nur ein begrenzter zeitlicher Kontext aus dem gemultiplexten Videosignal für die Wiedergewinnung des Farbhilfsträgers verwendet wird. Dieser zeitliche Kontext ist bevorzugt nicht länger als die Anzahl von Zeilen zwischen zwei Halbbildern, die keinen Burst aufweisen, oder beschränkt sich sogar auf die aktuelle Zeile des aufzuzeichnenden Videosignals. Bevorzugt ist der Videodecoder ausgebildet, das analoge Videosignal zunächst zu digitalisieren und dann schnell rastend digital auf der Grundlage hardware- oder softwaremäßig implementierter DSP-Algorithmen zu decodieren.

Bevorzugt zeichnet die Videosignal-Aufzeichnungseinrichtung das gemultiplexte Videosignal decodiert in digitaler Form auf ein Videoband oder auf eine Festplatte oder ein anderes digitales Massenspeichermedium wie CD-R, CD-RW oder DVD auf. Die Aufzeichnung in Form von Digitaldaten ist vorteilhaft darin, dass auch größere, durch das Umschalten von einer Kamera auf die nächste bedingte zeitliche Versätze bzw. Sprünge in der Horizontalsynchronisation, die zwischen den einzelne Kameras im Verlauf einer Videosignalperiode oder eines ganzzahligen Vielfachen davon auftreten können, ohne weiteres toleriert werden können, da bei der digitalen Aufzeichnung eine halbbildsynchrone Aufzeichnung nicht erforderlich ist und auf mechanische Massenträgheit des Aufzeichnungssystems keine Rücksicht genommen werden muss.

Um die Abweichungen sicher innerhalb der geforderten Toleranz zu halten, wird das Reset-Signal regelmäßig (gepulst) gesendet, bevorzugt mit der Frequenz von 6,25 Hz bei PAL und mit der Frequenz von 7,5 Hz oder 15 Hz bei NTSC. Dies führt zu einer Neusynchronisierung bevorzugt innerhalb der Rasterwechselimpulsfolge und bevorzugt nach jeweils 8 Halbbildern bei PAL bzw. nach jeweils 4 oder 8 Halbbildern bei NTSC. So kann eine typische PAL-Sequenz, die aus 8 Halbbildern besteht, komplett übertragen werden, was für die Decodierung der Farbsignale durch den Videosignaldecoder, insbesondere bei Verwendung eines Kammfilters zur Trennung der Luminanzkomponente von der Chromakomponente, vorteilhaft ist. Entsprechendes gilt für NTSC.

Gemäß einem bevorzugten Ausführungsbeispiel umfasst der Multiplexer einen einfachen elektronischen Analogsignal-Umschalter. In diesem Ausführungsbeispiel ist für die Videoaufzeichnungseinrichtung lediglich ein Videoeingang erforderlich. Die Umschaltung zwischen den angeschlossenen Kameras erledigt der elektronische Umschalter, der halbleitergesteuert die jeweiligen Videosignale der angeschlossenen Kameras auf einen Ausgangsanschluss umlegt. Dieser Umschalter braucht keinerlei Decodierung/Recodierung der Videosignale vorzunehmen oder Videosignale zu decodieren/recodieren. Die Herstellungskosten können dementsprechend günstig sein. Es ist natürlich ebenfalls möglich, den Multiplexer in die Videoaufzeichnungseinrichtung zu integrieren. In diesem Fall werden die jeweiligen Kameras direkt an die Videoaufzeichnungseinrichtung angeschlossen.

Gemäß einem bevorzugten Ausführungsbeispiel wird der Multiplexer von der Videoaufzeichnungseinrichtung über eine Schnittstelle gesteuert, bevorzugt über eine USB-Schnittstelle, wobei natürlich auch andere Schnittstellen wie parallele Schnittstellen (Centronics o.ä.), RS232 oder proprietäre Formate geeignet sind. Die Videoaufzeichnungseinrichtung kann den Umschalttakt vorgeben, beispielsweise durch Extraktion der Bildwechselimpulse aus dem von dem Multiplexer an die Videoaufzeichnungseinrichtung gelieferten Videosignale und/oder sie kann bestimmen, welche Kamera gerade aufgezeichnet wird. Dieses Ausführungsbeispiel ist darin vorteilhaft, dass in den Videosignalen der jeweiligen Kameras keine besonderen Kennsignale enthalten sein müssen, und dennoch eine eindeutige Zuordnung der Bildposition in der aufgezeichneten Vollbildfolge zu dem Eingang des Multiplexers, über den das Bild kam, möglich ist.

Gemäß einem weiteren, vorteilhaften Ausführungsbeispiel umfaßt der Multiplexer eine Steuerungseinrichtung, die über eine Schnittstelle, bevorzugt eine USB Schnittstelle, der Videoaufzeichnungseinrichtung für jedes Bild eine Kameraidentifikationsinformation, beispielsweise eine Identifikationsnummer der momentan auf den Ausgang des Multiplexers durchgeschalteten Kamera mitteilt oder Information darüber, welcher der Eingänge des Multiplexers momentan auf den Ausgang durchgeschaltet ist. Diese Information zeichnet die Videoaufzeichnungseinrichtung zusammen mit dem jeweiligen Bild auf, wobei bevorzugt auch noch die Tageszeit der Aufzeichnung hinzugefügt wird. Dieses Ausführungsbeispiel ist darin vorteilhaft, dass die gemultiplext aufgezeichneten Bilder bei der Wiedergabe den jeweils zugehörigen Eingängen des Multiplexers auch dann wieder zugeordnet werden können, wenn bei der Aufzeichnung keine bestimmte Reihenfolge eingehalten wurde oder die Reihenfolge variabel ist. Die Steuerungseinrichtung umfasst beispielsweise einen Microcontroller und ist bevorzugt programmiert, jeden Eingang einer Gruppe von Eingängen des Multiplexers zyklisch auf den Multiplexerausgang durchzugeschalten, und dabei einem Benutzer zu gestatten, die Häufigkeit, mit welcher der Multiplexer einen jeweiligen Eingang auf den Ausgang durchschaltet, und damit die Aufteilung der von der Videoaufzeichnungseinrichtung aufgezeichneten Bildrate auf die Kameras, individuell für die verschiedenen Kameras nach den Wünschen den Benutzers einzustellen. Bevorzugt umfasst der Multiplexer eine Einrichtung zur Erkennung von Ausfällen einzelner Kameras, und die Steuereinrichtung kann derart programmiert sein, dass sie auf die Erkennung eines Kameraausfalles hin den zur ausgefallenen Kamera gehörenden Multiplexereingang aus der Gruppe von zyklisch auf den Multiplexerausgang durchgeschalteten Multiplexereingängen entfernt und/oder auf die Erkennung eines ordnungsgemäßen Kamerasignales hin den zugehörigen Eingang in die Gruppe aufnimmt. Die Einrichtung zur Erkennung von Kameraausfällen kann beispielsweise eine Synchronisationsextraktionsschaltung für jeden Eingang des Multiplexers umfassen, die auf die in den von der jeweiligen Kamera gelieferten Videosignalen enthaltenen Horizontalund/oder Vertikalsynchronisationssignale einrastet und ein Signal an die Steuereinrichtung erzeugt, wenn ein eingerasteter Zustand nicht vorliegt. Bevorzugt wird in diesem Fall auch ein Warnsignal an den Benutzer erzeugt. Alternativ kann die Einrichtung zur Erkennung von Kameraausfällen eine Synchronisationsextraktionsschaltung umfassen, die auf die im Ausgangssignal des Multiplexers enthaltenen Horizontal- und/oder Vertikalsynchronisationssignale einrastet und ein Signal an die Steuereinrichtung erzeugt, wenn ein eingerasteter Zustand nicht vorliegt. Diese Alternative der Kameraausfallerkennung ist vorteilhaft darin, dass für die mehreren Kanäle lediglich eine Synchronisationsextraktionsschaltung erforderlich ist. Allerdings wird ein Kameraausfall bei dieser Alternative nicht unmittelbar, sondern erst dann entdeckt, wenn der zugeordnete Eingang des Multiplexers auf den Ausgang des Multiplexers geschaltet wird.

Die Videoaufzeichnungseinrichtung umfasst gemäß einem vorteilhaften Ausführungsbeispiel auch mindestens einen Videoencoder zum Wiedergeben der aufgezeichneten Bilder. Beispielsweise ist für jeden wiederzugebenden Kanal ein separater Videoencoder vorgesehen, um die gleichzeitige Wiedergabe mehrerer Kanäle zu ermöglichen. Gemäß einem anderen Ausführungsbeispiel genügt ein Videoencoder, um einen auswählbaren der aufgezeichneten Kanäle im Vollbildmodus wiederzugeben, oder mehrere Kanäle mit reduzierter Größe gleichzeitig auf einem Bildschirm wiederzugeben (Multibilddarstellung).

Bevorzugt wird beim Wiedergeben der von der Videoaufzeichnungseinrichtung aufgezeichneten Bilder eine Videosignalnorm, beispielsweise die PAL-Norm, eingehalten.

Durch die Aufzeichnung und spätere Wiedergabe wird somit eine Rückwandlung der gemultiplexten, durch die Zulassung von zeitlichen Versätzen zwischen den gemultiplexten Videosignalen nicht normgerechten Signale in normgerechte Signale erreicht, so dass handelsübliche Fernseh- oder Videomonitore für die Darstellung dieser Signale verwendet werden können.

Bevorzugt kann für den Anschluss der Kameras an den Multiplexer ein modernes, mehradriges Kabel verwendet werden, welches alle relevanten Leitungen enthält. Zum Einsatz kommt besonders bevorzugt ein Kabel/Steckersystem nach RJ-45 Standard, wie es im Computer-Netzwerkbereich (Fast Ethernet) und im Bereich Telekommunikation üblich ist.

Der RJ-45-Stecker wurde von ISO /IEC JTC1/SC25/WG3 als Standard IS 11801 definiert und ist Bestandteil des universellen Verkabelungssystems gemäß ANSI/TIA/EIA 568A. Er hat im Computernetzwerkbereich von allen Datensteckern die höchste Verbreitung. Das achtadrige Kabel kann einfach durch Crimpen mit Steckern versehen werden, es verfügt über eine Arretierung in der Dose ("Modular Western Connector"), und die Materialien sind relativ preiswert. Dabei lässt sich vorteilhaft ausnutzen, dass solche Kabel in vielen Fällen bereits vorhanden sind. In modernen Bürogebäuden werden meist mehr Netzwerk- und Telefon-Dosen als notwendig verlegt, um die Büronutzung flexibler zu gestalten. Hier können einfach durch Umstecken im Patch-Panel solche Dosen direkt für das erfindungsgemäße Videoüberwachungssystem genutzt werden.

In dem achtadrigen Kabel sind bevorzugt alle relevanten Leitungen (Video, Reset, 12 V, Masse, Alarm) integriert. Die Spannungsversorgung für die Kameras wird dabei bevorzugt vom Videoaufzeichnungsgerät oder vom Multiplexer geliefert, so dass dann Netzteile für die einzelnen Kameras entfallen können. Die Verkabelung kann ohne 240V-Arbeiten durchgeführt werden, die Kabellängen entsprechen in etwa den üblichen bei Einsatz von RG 59.

Da die Impedanz des Kabels mit 100 Ohm gemäß diesem bevorzugten Ausführungsbeispiel vom üblichen Videostandard (75 Ohm koaxial) abweicht, werden alle beteiligten Elemente vorteilhaft auf diese Impedanz abgestimmt, um eine optimale Bildqualität zu erreichen.

Erfindungsgemäß werden die Kameras durch eine besondere Technik miteinander synchronisiert, was einen teueren digitalen Multiplexer überflüssig macht. Bei der Verkabelung können preiswerte, einfach zu verlegende Kabel aus dem Computerbereich (Ethernet) zum Einsatz kommen. Bevorzugt erledigt ein einziges Kabel alle Aufgaben.

Im folgenden wird ein bevorzugtes Ausführungsbeispiel der vorliegenden Erfindung anhand der begleitenden Zeichnungen beschrieben. Diese zeigen:
- Fig. 1: zeigt ein Ausführungsbeispiel des erfindungsgemäßen Videoüberwachungssystems im Überblick;
- Fig. 2: zeigt ein Ausführungsbeispiel einer Kamera für das erfindungsgemäße Videoüberwachungssystem;
- Fig. 3: zeigt ein Ausführungsbeispiel des Videomultiplexers in dem erfindungsgemäßen Videoüberwachungssystem;
- Fig. 4: zeigt ein Ausführungsbeispiel der Steuerung des erfindungsgemäßen Videoüberwachungssystems; und
- Fig. 5: zeigt ein Zeitdiagramm zur Erläuterung der Funktion des in Fig. 1 überblicksartig dargestellten Videoüberwachungssystems.

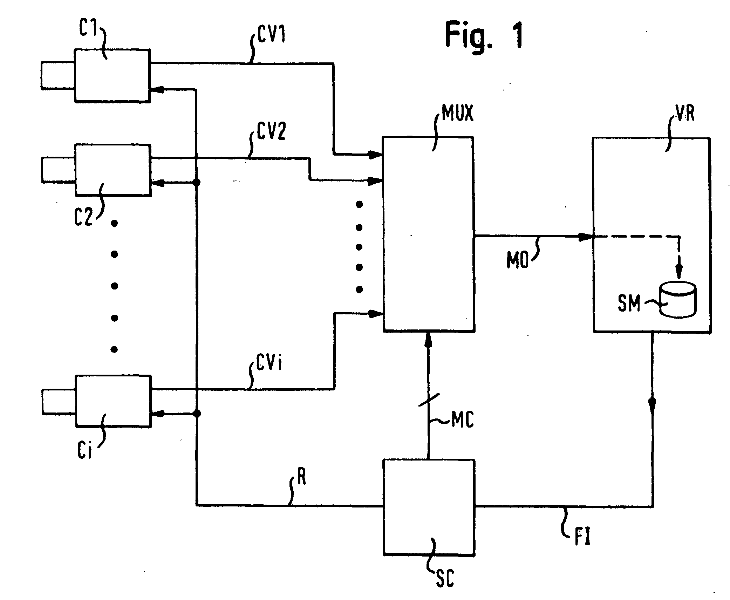

Fig. 1 zeigt ein Ausführungsbeispiel des erfindungsgemäßen Videoüberwachungssystems im Überblick. In dieser Figur bezeichnen C1, C2,..., Ci jeweils Videokameras, die vor Ort an verschiedenen Stellen eines zu überwachenden Gebäudes, Grundstücks oder auch an verschiedenen Stellen in der Öffentlichkeit angeordnet sein können, um dort eine optische Überwachungsfunktion wahrzunehmen. MUX bezeichnet einen analogen Videomultiplexer, mit einer Anzahl von analogen Videoeingängen, wobei für jede anzuschließende Kamera Ci ein separater analoger Videoeingang am Multiplexer MUX vorhanden ist. MO bezeichnet einen Ausgang des analogen Videomultiplexers MUX, auf welchem die Videosignale am Eingang des Multiplexers MUX im Zeitmultiplex vorhanden sind. Der Begriff Zeitmultiplex bedeutet hierbei, dass die jeweiligen Signale am Eingang des Multiplexers der Reihe nach für ein bestimmtes Zeitintervall auf den Ausgang durchgeschaltet werden, während die übrigen Kamerasignale nicht auf den Ausgang MO durchgeschaltet werden. Der Multiplexer MUX multiplext also die Signale der Kameras C1 bis Ci in dem Sinne, dass er an seinem Ausgang MO eine zyklische Abfolge von Signalausschnitten von den jeweiligen Kameras C1 bis Ci bereitstellt. VR bezeichnet eine Videosignalaufzeichnungseinrichtung, welche mit dem Ausgang MO des Multiplexers MUX verbunden ist, um das Ausgangssignal des Multiplexers aufzuzeichnen. SM bezeichnet ein Medium zum Speichern der in dem am Ausgang MO vorhandenen Videosignal enthaltenen Bildinformation. In dem in Fig. 1 gezeigten, bevorzugten Ausführungsbeispiel ist das Speichermedium SM eine Festplatte, die dazu dient, die digitalisierte, decodierte Bildinformation am Ausgang des Multiplexers MUX zu speichern, nachdem diese Information von einem Bildkompressionsalgorithmus, beispielsweise nach dem JPEG-Standard oder dem MPEG-Standard, datenkomprimiert wurde. Selbstverständlich können für das Speichermedium SM anstelle einer Festplatte auch andere Speichermedien verwendet werden. Beispielsweise kann die am Ausgang MO des Multiplexers MUX bereitgestellte Bildinformation auf ein geeignetes Magnetband aufgezeichnet werden, oder es kann ein optisches Plattenspeichermedium, z.B. eine einmal oder mehrfach beschreibbare CD-ROM oder DVD für die Speicherung der Bildinformation verwendet werden. Einmal beschreibbare optische Plattenspeichermedien, wie DVD-R, DVD+R, CD-R, sind dabei insofern besonders vorteilhaft, als dass nachträgliche Manipulationen an den gespeicherten Daten nicht ohne weiteres möglich, zumindest jedoch nachweisbar sind.

In dem in Fig. 1 gezeigten Ausführungsbeispiel bezeichnet SC eine Systemsteuerung, welche einerseits den Multiplexer MUX steuert, und andererseits an die Kameras C1, C2,..., Ci ein Rücksetzsignal liefert. R bezeichnet eine Leitung von der Systemsteuerung SC an einen Eingang an jeder der Kameras C1, C2,..., Ci, über welchen diese ein Rücksetzsignal empfangen können.

MC bezeichnet in diesem Ausführungsbeispiel eine Vielzahl binärer Steuerleitungen, über welche digitale Auswahlsteuersignale an den Multiplexer MUX übertragen werden können, die die Systemsteuerung SC erzeugt. Diese Auswahlsteuersignale über die Auswahlleitungen MC an den Multiplexer MUX bestimmen, welcher der Eingänge des Multiplexers, und demgemäss, welches der von den Videokameras erzeugten Videosignale CV1, CV2,..., CVi auf den Ausgang MO des Multiplexers MUX durchgeschaltet wird. Obwohl für die Auswahlsteuersignale ein paralleles Signalformat dargestellt ist, ist es natürlich alternativ möglich, die Auswahlsteuerinformation seriell an den Multiplexer MUX zu übertragen.

FI bezeichnet eine Steuerleitung, die von der Videosignalaufzeichnungseinrichtung VR an die Systemsteuerung SC führt. Über diese Steuerleitung stellt die Videosignalsaufzeichnungseinrichtung VR Information an die Systemsteuerung SC bereit, welcher der Videokanäle CV1, CV2,..., CVi als nächstes aufgezeichnet werden soll. Gemäss diesem Ausführungsbeispiel steuert somit die Videosignalaufzeichnungseinrichtung VR die Auswahl derjenigen Kameras, die momentan aufgezeichnet werden soll, und bestimmt die Abfolge der aufgezeichneten Kanäle. Weil diese Information in diesem Ausführungsbeispiel von der Videosignalaufzeichnungseinrichtung VR erzeugt wird, erübrigt sich in diesem Ausführungsbeispiel eine Kanalkennung in den von den jeweiligen Videokameras C1, C2,..., Ci erzeugten Videosignalen, oder eine Vorrichtung, die eine solche Kanalkennung als Funktion der Auswahlsignale MC dem Ausgangssignal MO des Multiplexers MUX hinzufügt. Dennoch kann das in Fig. 1 gezeigte Ausführungsbeispiel eines Videoüberwachungssystems natürlich auch derart ausgestaltet sein, dass die Kanalauswahlinformation nicht von dem Videorecorder VR erzeugt wird, sondern jede der Videokameras C1, C2,..., Ci eine Kanalkennung enthält, beispielsweise in den zur Vertikalsynchronisation vorgesehenen Signalabschnitten der von den jeweiligen Kameras erzeugten Videosignale, oder die Systemsteuerung SC zusätzliche, in Fig. 1 nicht gezeigte Vorrichtungen umfasst, die solche Kanalkennungen dem Ausgangssignal MO des Multiplexers MUX hinzufügen. Die von der Videosignalaufzeichnungseinrichtung VR erzeugte Kanalauswahlinformation über die Steuerleitung FI bzw. die Kanalkennungen dienen dazu, die aufgezeichneten Bilder bei der Wiedergabe zu demultiplexen, also die aufgezeichneten Bilder ihren jeweiligen Kanälen zuzuordnen, und die zu einem Kanal gehörenden Bilder unabhängig von den Bildern, die zu anderen Kanälen gehören, wiedergeben zu können.

Die im Ausführungsbeispiel nach Fig. 1 gezeigten Kameras C1, C2,..., Ci können ausgestaltet sein, FBAS-Videosignale CV1, CV2,..., CVi nach dem PAL-Standard oder nach dem NTSC-Standard zu erzeugen, oder die Kameras C1, C2,..., Ci können im kostengünstigsten Fall Schwarz-Weiß-Kameras sein. Die Systemsteuerung SC erzeugt das Rücksetzsignal R für diese Kameras vorteilhaft mit einer Nennperiode, die der Nennperiode der von den jeweiligen Videokameras erzeugten Videosignale entspricht oder ein ganzzahliges Vielfaches der Nennperiode der von den Kameras erzeugten Videosignale ist. Die Videokameras C1, C2,..., Ci werden durch das Rücksetzsignal R in einen definierten Ausgangszustand versetzt, der für alle Videokameras gleich ist und durch das Rücksetzsignal gleichzeitig eingenommen wird. Ausgehend von diesem Ausgangszustand arbeiten die Videokameras bis zum nächsten Rücksetzsignal freilaufend, was aufgrund der Toleranz der in den Kameras vorgesehenen Taktoszillatoren dazu führt, dass die Synchronität der von den einzelnen Kameras gelieferten Videosignale progressiv verloren geht, bis das nächste Rücksetzsignal R erzeugt wird. Die Nennfrequenz für das Rücksetzsignal beträgt für den Fall des PAL-Standards bevorzugt 6,25 Hz, was 8 Halbbildern und somit der Nennperiode des PAL-Signals entspricht. Falls NTSC-Signals von den Kameras erzeugt werden, ist ebenfalls eine Nennperiode für das Rücksetzsignal von 8 Halbbildern geeignet, was bei NTSC mit 30 Vollbildern pro Sekunde eine Nennfrequenz für das Rücksetzsignal R von 7,5 Hz bedeutet.

Natürlich unterliegt auch das Rücksetzsignal R einer gewissen Toleranz, und auch die Periode des Rücksetzsignals R wird innerhalb dieser Toleranzen von der Nennperiode abweichen. Das in Fig. 1 gezeigte Ausführungsbeispiel ist darin besonders vorteilhaft, dass es solche Toleranzen zulässt und dennoch eine einwandfreie Aufzeichnung von Bildern, die von den Kameras C1, C2,..., Ci geliefert werden, in einer zyklischen Abfolge ermöglicht. In dem in Fig. 1 gezeigten Ausführungsbeispiel sorgt die Steuereinrichtung SC dafür, dass innerhalb der zeitlichen Toleranzen der von den jeweiligen Kameras erzeugten Videosignale CV1,..., CVi und der Rücksetzimpulse R jede der Kameras abwechselnd ungefähr für die Dauer eines Vollbildes auf den Ausgang MO des Multiplexers MUX durchgeschaltet wird, gemäß der Vollbildidentifikationsinformation, die die Videosignalaufzeichnungseinrichtung VR der Steuereinrichtung SC bereitstellt. Aufgrund der zeitlichen Toleranzen ergeben sich jedes Mal, wenn von einem Videokanal auf den nächsten umgeschaltet wird, im Ausgangssignal MO des Multiplexers zeitliche Verwerfungen oder Versätze, denn die Videokameras in diesem Ausführungsbeispiel sind zwischen den jeweiligen Rücksetzimpulsen freilaufend. Diese Versätze machen sich beispielsweise darin bemerkbar, dass zwei Horizontal-Synchronisationsimpulse, zwischen denen eine Umschaltung auf den nächsten Kanal stattgefunden hat, zeitlich weiter oder kürzer beabstandet sind als die vorangehenden und nachfolgenden Horizontal-Synchronisationsimpulse. Besonders stark macht sich ein solcher zeitlicher Versatz in der Phase des Bursts für die Rückgewinnung des Farbhilfsträgers bemerkbar, falls die jeweiligen Kameras standardkonforme FBAS-Farbsignale erzeugen. Im Ausgangssignal MO des Multiplexers MUX haben zwei aufeinanderfolgende Bursts, zwischen denen eine Kanalumschaltung stattgefunden hat, keine vorhersagbare Phasenbeziehung mehr zueinander, wenn für die Taktoszillatoren in den Kameras und in der Systemsteuerung SC handelsübliche Quarze verwendet werden, die beispielsweise eine Toleranz von 20 ppm aufweisen.

In dem in Fig. 1 gezeigten Ausführungsbeispiel ist die Videoaufzeichnungsvorrichtung VR so konstruiert, dass sie in der Lage ist, das Videosignal am Ausgang MO des Multiplexers MUX trotz der darin auftretenden zeitlichen Versätze oder Verwerfungen einwandfrei zu verarbeiten. In dem in Fig. 1 gezeigten Ausführungsbeispiel weist die Videosignalaufzeichnungseinrichtung VR für die Verarbeitung des von dem Multiplexer MUX gelieferten Videosignals einen Videodecoder auf, der das Videosignal volldigital durch A/D-Wandlung des gesamten FBAS-Videosignals bei einer Abtastrate von beispielsweise 27 MHz, Extraktion der Horizontal-, Vertikalsynchronisation, Rückgewinnung des Farbhilfsträgers, Trennung der Luminanz- und Chromasignalanteile und QAM-Demodulation des Chromasignals unter Zuhilfenahme des wiedergewonnenen Farbhilfsträgers mittels digitaler Signalsverarbeitungsalgorithmen decodiert. Die dadurch erhaltenen, digitalen Bildsignalkomponenten Y, U, V oder R, G, B werden dann in der Videosignalaufzeichnungseinrichtung auf ein digitales Massenspeichermedium aufgezeichnet, wie bereits beschrieben wurde. Der Videosignaldecoder in der Videoaufzeichnungseinrichtung VR wird gemäss diesem Ausführungsbeispiel sowohl für die Wiedergewinnung der Horizontalsynchronisation als auch für die Wiedergewinnung des Farbhilfsträgers in einem sog. Fast-Locking-Modus betrieben, der für die Wiedergewinnung dieser Informationen lediglich auf einen zeitlich beschränkten Signalausschnitt des zu verarbeitenden Videosignals zurückgreift. Solche volldigitalen Videodecoderschaltkreise sind als integrierte Schaltungen kommerziell erhältlich. Beispielsweise ist der SAA 7113 von Philips für die Decodierung der Videosignale im Fast-Locking-Modus geeignet.

Selbstverständlich sind jedoch auch andere Videosignaldecoderschaltkreise für die Decodierung des vom Multiplexer MUX bereitgestellten Ausgangssignals MO geeignet. Als Alternative zur volldigitalen Decodierung, wie beispielsweise im SAA 7113 von Philips realisiert, ist es natürlich möglich, diese Funktionen konventionell analog oder teilweise analog, teilweise digital zu realisieren, wozu dem Fachmann auf dem Gebiet der Videosignalverarbeitung eine breite Fülle von Schaltungen zur Verfügung steht. Für die Extraktion der Horizontal-Vertikal-Synchronisation sowie des Farbhilfsträgers finden dabei üblicherweise Phasenregelschleifen, d.h. PLLs, Verwendung. Auch derartige Schaltungsarchitekturen sind für das in Fig. 1 gezeigte Ausführungsbeispiel geeignet, wenn die PLL für die Wiedergewinnung des Farbhilfsträgers so konstruiert ist, dass sie auf Phasensprünge, die durch das Umschalten des Multiplexers von einer Kamera auf die nächste verursacht werden, schnell rasten kann.

Diese Fähigkeit, auf Phasensprünge schnell zu reagieren, kann dabei auf verschiedene Arten realisiert werden. Beispielsweise kann die Anzahl vom Farbhilfsträger-Bursts, die für die Nachführung der Phase des regenerierten Farbhilfsträgers verwendet werden, zeitlich beschränkt werden, beispielsweise mit Hilfe einer rechteckigen oder Cosinus-förmigen Fensterfunktion, die auf das zu decodierende Videosignal oder die daraus extrahierten Farbhilfsträger-Bursts angewendet wird. Diese Fensterfunktion definiert den zeitlichen Kontext, der für die Wiedergewinnung des Farbhilfsträgers verwendet wird, und verhindert, dass in der Vergangenheit aufgetretene Phasensprünge über einen längeren Zeitraum einen störenden Einfluss auf die Wiedergewinnung des Farbhilfsträgers haben. Entsprechend der zeitlichen Ausdehnung der Fensterfunktion wird die Bandbreite der Phasenregelschleife ausreichend hoch eingestellt. Für den Fall, dass die Videokameras C1, C2,..., Ci Farbsignale nach dem PAL-Standard erzeugen, ist es vorteilhaft, für beide Burst-Phasen eine separate, in Software für einen digitalen Signalprozessor oder in Hardware implementierte Regelschleife vorzusehen, und die gefensterten Bursts abwechselnd den beiden Regelschleifen zuzuführen. Die Breite des zeitlichen Fensters wird dabei bevorzugt so gewählt, dass sie nicht über die Dauer der Rasterwechselimpulsfolge zwischen den jeweiligen Halbbildern hinausreicht. Bevorzugt erzeugen die Kameras C1, C2,..., Ci während der Rasterwechselimpulsfolge keinen Burst. Da die Umschaltung von einer Kamera auf die nächste durch den Multiplexer MUX in diesem Ausführungsbeispiel bevorzugt während der Rasterwechselimpulsfolge zwischen den Halbbildern stattfindet, wird dadurch vermieden, dass die Schaltung zur Wiedergewinnung des Farbhilfsträgers im Videosignaldecoder zeitlich unmittelbar aufeinander abfolgende Bursts verarbeiten muss, deren Phasenbeziehung zueinander unvorhersagbar ist.

Zusätzlich oder alternativ zu den genannten Maßnahmen kann die Videosignaldecoderschaltung in der Videosignalaufzeichnungseinrichtung VR vorteilhaft ausnutzen, dass in dem Ausführungsbeispiel nach Fig. 1 die Umschaltung mittels des Multiplexers MUX von einer Kamera auf die nächste mit der Vollbildwechselfrequenz während der Rasterwechselimpulsfolge stattfindet. Die Videosignaldecoderschaltung verwendet deshalb für die Extraktion des Farbhilfsträgers und/oder für die Extraktion der Horizontalsynchronisation aus dem zu decodierenden Videosignal vorteilhaft solche Signalanteile nicht, die vor dem letzten Vollbildwechsel empfangen wurden, sondern beschränkt den Signalausschnitt aus dem zu decodierenden Videosignal bei der Extraktion der Horizontalsynchronisation und/oder der Wiedergewinnung des Farbhilfsträgers auf das aktuelle Vollbild.

Die Videosignalaufzeichnungseinrichtung VR in dem Ausführungsbeispiel nach Fig. 1 umfasst außerdem in der Figur nicht im einzelnen dargestellte Einrichtungen zum Wiedergeben der aufgezeichneten Bilder. Um die aufgezeichnete Abfolge von Bildern den jeweiligen Kanälen, d.h. den Videokameras, von denen diese Bilder stammen, bei der Wiedergabe zuordnen zu können, zeichnet die Videosignalaufzeichnungseinrichtung VR in dem Ausführungsbeispiel der Fig. 1 die von den jeweiligen Videokameras C1,..., Ci gelieferten Bilder dabei in einer vorbestimmten zeitlichen Reihenfolge auf, oder in einer Reihenfolge, die die Videosignalaufzeichnungseinrichtung VR über die Steuerleitung FI an die Systemsteuerung SC selbst bestimmt hat. Demgemäss leitet die Videosignalaufzeichnungseinrichtung VR bei der Wiedergabe die aufgezeichneten Bilder in der Reihenfolge ihrer Aufzeichnung einer Reihe von Ausgabekanälen zu, wobei die Zuordnung von aufgezeichneten Bildern zu den dazugehörigen Ausgabekanälen alleine aus der Reihenfolge der aufgezeichneten Bilder eindeutig möglich ist, denn diese Reihenfolge, oder falls diese vorbestimmt ist, die Position zumindest eines bestimmten Kanals in der Abfolge zu aufgezeichneten Bildern, wurde von der Videosignalaufzeichnungseinrichtung VR mittels der Steuerleitung FI selbst bestimmt. Die Videosignalaufzeichnungseinrichtung VR leitet in diesem Ausführungsbeispiel die digital aufgezeichneten Bilder, die zu demselben Kanal gehören, einem jeweiligen Videosignalencoder zu, der aus dieser Bildsequenz des jeweiligen Kanals ein normgerechtes Videosignal erzeugt, das auf Standard-Fernseh- oder Videomonitoren angezeigt werden kann. Weil sich in diesem Ausführungsbeispiel eine Vielzahl von Kameras die Vollbildrate bei der Aufzeichnung teilen, werden in jedem Wiedergabekanal die Vollbilder entsprechend der Anzahl der aufgezeichneten Kanäle wiederholt, um bei der Wiedergabe eine normgerechte Vollbildrate zurückzuerhalten. Diese Demultiplexfunktion und Bildratenwiederherstellung durch Wiederholung des wiedergegebenen Vollbildes wird bevorzugt vollständig digital realisiert. Für die Umwandlung des resultierenden digitalen Bildsignals in ein normgerechtes FBAS-Videosignal zur Anzeige auf einem Standard-Monitor ist eine Vielfalt von speziell für diesen Zweck vorgesehenen integrierten Schaltungen auf dem Markt erhältlich. Beispielsweise ist der SAA 7126 von Philips ein kommerziell erhältlicher Baustein, der für die Realisierung dieser Funktion geeignet ist. Für jeden Wiedergabekanal ist ein solcher Videoencoder vorgesehen. Die Vollbilder eines jeden Kanals werden in dem in Fig. 1 gezeigten Ausführungsbeispiel in einen jeweiligen Vollbildpufferspeicher eingelesen, der von dem jeweiligen Videosignalencoder so oft ausgelesen wird, wie viele Kanäle sich die Vollbildaufzeichnungsrate der Videosignalaufzeichnungseinrichtung VR teilen, bevor der Inhalt des Vollbildpufferspeichers eines jeweiligen Kanals durch Auslesen des nächsten, zu dem jeweiligen Kanal gehörenden Vollbildes aus der Massenspeichereinrichtung SM aktualisiert wird.

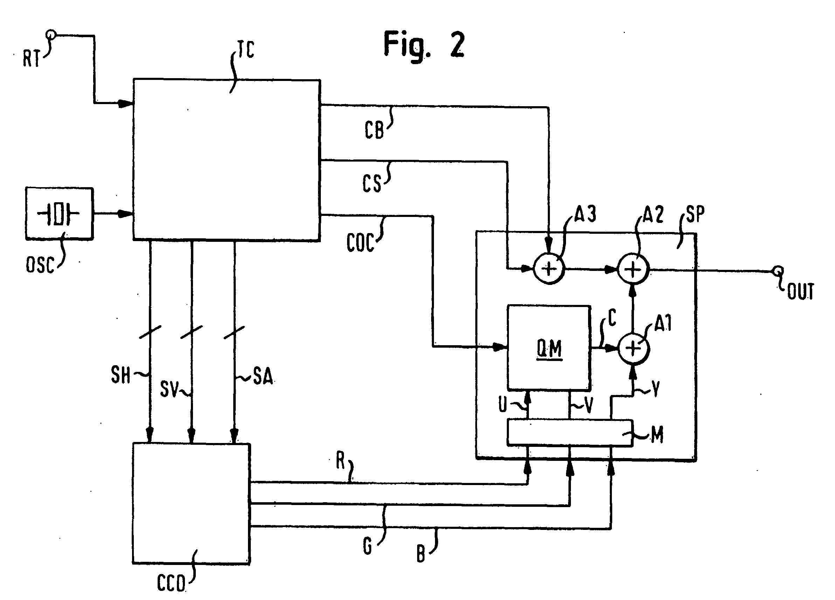

Fig. 2 zeigt ein Ausführungsbeispiel der Videokameras C1,..., Ci in dem in Fig. 1 gezeigten System. Jede der Kameras Ci kann dabei identisch ausgebildet sein, mit einer Struktur, die beispielhaft in Fig. 2 gezeigt ist.

Die in Fig. 2 gezeigte Videokamera umfasst einen CCD-Bildwandler, der in Fig. 2 mit dem Bezugszeichen CCD bezeichnet ist. Derartige Bildwandler sind von verschiedenen Herstellern kommerziell erhältlich. Das in Fig. 2 gezeigte Ausführungsbeispiel zeigt ein Blockschaltbild einer Farbbildkamera. R, G und B bezeichnen die analogen Videosignalausgänge des Farbbild-CCD-Wandlers. Bezugszeichen SP bezeichnet einen Videosignalverarbeitungsblock. Dieser Videosignalverarbeitungsblock umfasst eine Matrix M, in welcher die von dem CCD-Bildwandler gelieferten Signale R, G und B in bekannter Weise in ein Luminanzsignal Y sowie in zwei Chromasignalkomponenten U und V durch lineare Überlagerung in bekannter Weise umgeformt werden. Der Videosignalverarbeitungsblock SP umfasst außerdem einen Quadraturmodulator QM, welcher ein Farbhilfsträgersignal COC empfängt und die Farbsignale U, V auf den Farbhilfsträger quadraturamplitudenmoduliert, um ein Chromasignal C zu erhalten. A1 bezeichnet einen Addierer, welcher das Luminanzsignal Y und das Chromasignal C addiert. Dieses addierte Signal wird in einem weiteren Addierer A2 um weitere Signalkomponenten CS zur Horizontal- und Vertikalsynchronisation ergänzt, um am Ausgang OUT ein normgerechtes FBAS-Videoignal bereitzustellen. Der Farbhilfsträger COC sowie die Austast-, Horizontal- und Vertikalsynchronimpulse CS als auch das Burstsignal CB, das im Addierer A3 dem Ausgangssignal hinzugefügt wird, werden von einem Zeitgeberschaltkreis TC geliefert. Solche Zeitgeberschaltkreise sind in integrierter Form von verschiedenen Herstellern kommerziell erhältlich, ebenso wie integrierte Schaltkreise, welche die gerade beschriebenen Videosignalverarbeitungsfunktionen durchführen. OSC bezeichnet einen Schaltkreis zur Erzeugung eines Taktsignals, welches die Abläufe in dem Zeitgeberschaltkreis TC steuert. Der Taktoszillator OSC umfasst einen Quarz mit handelsüblicher Genauigkeit, beispielsweise 20 ppm.

Der Zeitgeberschaltkreis TC erzeugt außerdem synchron zu den Signalen CB, CS und COC auch die Steuersignale für den CCD-Bildwandler. Diese Steuersignale umfassen Steuersignale SH für die Horizontalsynchronisation der CCD-Bildwandlermatrix, sowie Signale SV für die Vertikalsynchronisation des Auslesevorganges der CCD-Bildwandlermatrix, und außerdem auch analoge Signale SA für die Einstellung von Arbeitspunkten, wie Belichtung, Verschlusszeiten, Gleichspannungspegel usw., für die CCD-Bildwandlermatrix.

Das Bezugszeichen RT bezeichnet einen Anschluss des Zeitgeberschaltkreises TC für den Empfang eines externen Rücksetzsignals. Immer wenn der Zeitgeberschaltkreis der Videokamera in dem in Fig. 2 gezeigten Ausführungsbeispiel an dem Rücksetzeingang RT ein externes Rücksetzsignal empfängt, nimmt der Zeitgeberschaltkreis TC einen vorbestimmten Ausgangszustand ein und beginnt ausgehend davon mit der Erzeugung der Austast- und Synchronisationssignale CS, des Bursts CB und des Farbhilfsträgers COC für den Videosignalverarbeitungsteil SP, und steuert auch den Auslesevorgang des CCD-Bildwandlers über die dazugehörigen Steuersignale SH, SV und SA entsprechend. Wird also, wie in Fig. 1 gezeigt, von der Systemsteuerung SC an die jeweiligen Videokameras, von denen ein Ausführungsbeispiel in Fig. 2 gezeigt ist, ein solches Rücksetzsignal R über deren jeweiligen Rücksetzsignaleingangsanschluss RT zugeführt, beginnt jede Videokamera aufgrund dieses Rücksetzsignals erneut, ausgehend von einem definierten Zustand, mit der Erzeugung eines FBAS-Videosignals, so dass alle Videokameras an derselben Stelle im Zyklus eines normgerechten FBAS-Videosignals beginnen. Diese Stelle ist üblicherweise der Beginn des ersten Halbbildes, kann aber ebenso beliebig an irgendeine andere Stelle im Zyklus des normgerechten FBAS-Videosignals gelegt werden, solange alle Kameras an derselben Stelle auf das Rücksetzsignal hin im Zyklus beginnen.

Der Rücksetzsignaleingang RT ist bei der in Fig. 2 gezeigten Videokamera nach außen geführt, so dass ein einfacher Anschluss der das Rücksetzsignal führenden Leitung von der Systemsteuerung SC in Fig. 1 an die jeweiligen Kameras möglich ist. Bevorzugt ist die in Fig. 2 gezeigte Kamera so ausgebildet, dass die Spannungsversorgungsanschlüsse für die Schaltungskomponenten der jeweiligen Kamera, der Ausgangsanschluss OUT, an welchem die Kamera das FBAS-Videosignal bereitstellt, sowie der Rücksetzsignalanschluss RT auf verschiedene Kontakte ein- und desselben Steckers bzw. ein- und derselben Buchse gelegt sind, die von außen an der Kamera, ggf. hinter einer Schutzklappe oder Schutzabdeckung, zugänglich ist. Bevorzugt wird an der Kamera eine Buchse nach dem RJ-45-Standard vorgesehen, die im Computer-Netzwerkbereich (Fast-Ethernet) und im Bereich der Telekommunikation üblich und dort weit verbreitet ist.

Obwohl das in Fig. 2 gezeigte und voranstehend beschriebene Ausführungsbeispiel eine CCD Kamera betrifft, können erfindungsgemäß natürlich auch andere Kameratypen, beispielsweise solche, die einen SRAM oder ein Vidikon als Bildwandler verwenden, zum Einsatz kommen.

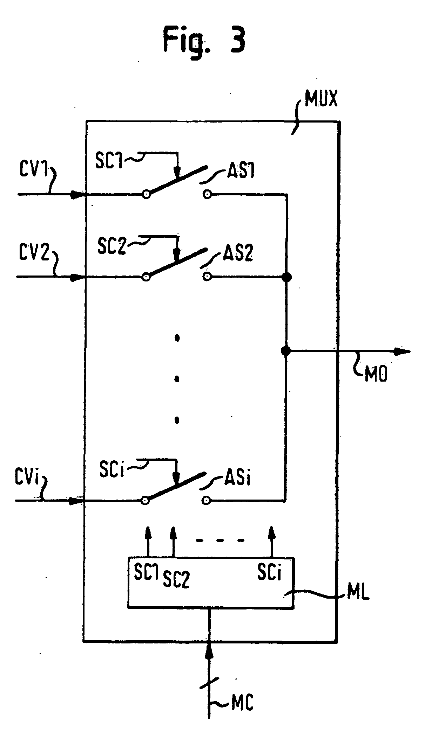

Fig. 3 zeigt ein Ausführungsbeispiel des Multiplexers, wie er in dem in Fig. 1 gezeigten Ausführungsbeispiel des Videoüberwachungssystems zum Einsatz kommt. Dieser Multiplexer MUX umfasst eine Vielzahl von Analogschaltern AS1, AS2,..., ASi. Für jeden Signaleingang CV1, CV2,..., CVi ist ein entsprechender Analogschalter vorgesehen. Jeder Analogschalter hat einen Signaleingang und einen Signalausgang. Jeder Analogschalter verbindet signalflußmässig seinen Signaleingang mit seinem Signalausgang gemäss einem Steuersignal SC1,..., SCi. Schaltungstechnisch ist jeder Analogschalter üblicherweise als Verstärkerschaltung ausgebildet, deren Verstärkung gemäss dem jeweiligen binären Steuersignal SC1,..., SCi allgemein zwischen zwischen 0 und einem Wert größer Null umgeschaltet werden kann, beispielsweise zwischen 0 und ungefähr 1 oder zwischen 0 und ungefähr 2.

Wie in Fig. 3 dargestellt, ist der Multiplexer MUX so verschaltet, dass jedes Eingangssignal CV1, CV2,..., CVi von den jeweiligen Kameras an den Eingang eines entsprechenden Analogschalters AS1, AS2,..., ASi angelegt wird. Die Ausgänge der Analogschalter AS1, AS2,..., ASi sind miteinander gekoppelt und stellen den Ausgangsanschluss MO des Multiplexers MUX dar. Demgemäss kann abhängig davon, welcher der Analogschalter AS1, AS2,..., ASi von seinem zugehörigen Steuersignal SC1, SC2,..., SCi gerade auf Durchgang geschaltet wurde, der zugehörige Signaleingang CV1, CV2,...CVi von den jeweiligen Videokameras auf den Ausgang MO des Multiplexers MUX gelegt werden.

Das Bezugszeichen ML bezeichnet einen Logikschaltungsteil, der dazu dient, das üblicherweise in binär codierter Form vorliegende, parallele oder serielle Auswahlsteuersignal MC für die Auswahl eines der Analogschalter AS1, AS2,..., ASi des Multiplexers MUX so umzucodieren, dass für jeden Schalter ein individuelles Steuersignal zur Verfügung steht, dessen Pegel mittels des binär codierten Auswahlsteuersignals MC gesteuert wird. Dabei gibt es für jeden Binärwert, den das Auswahlsteuersignal MC repräsentieren kann, höchstens ein Steuersignal SCi, welches einen Pegel annimmt, so dass dessen zugeordneter Analogschalter durchschaltet. Demgemäss wird von dem Auswahlsteuersignal MC niemals mehr als eines der von den Videokameras gelieferten Videosignale CV1, CV2,..., CVi an den Ausgang MO des Multiplexers MUX durchgeschaltet.

Der Multiplexer MUX in dem in Fig. 3 gezeigten Ausführungsbeispiel kann vorteilhaft auf der Grundlage von kommerziell erhältlichen Analog-Videomultiplexerschaltungen realisiert werden, die beispielsweise in Form von integrierten Schaltungen (IC) erhältlich sind. Ein geeigneter integrierter Schaltkreis für den Multiplexer ist der MAX4312, erhältlich vom Hersteller Maxim.

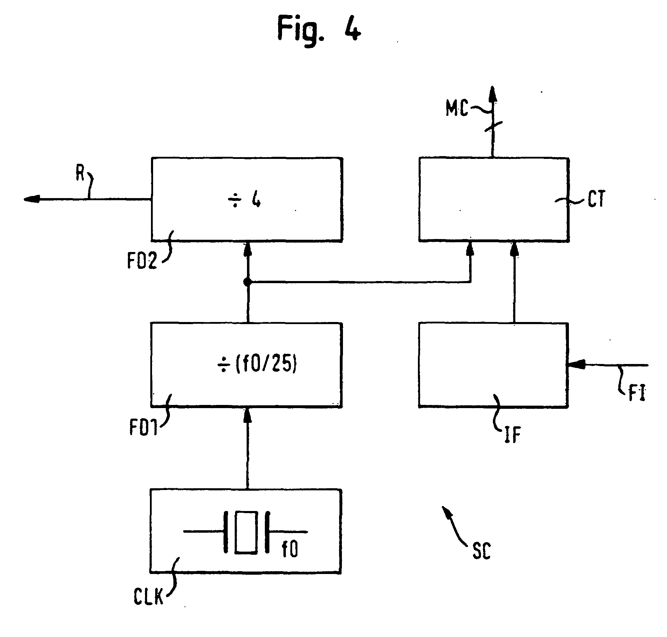

Fig. 4 zeigt ein Ausführungsbeispiel der in Fig. 1 gezeigten Systemsteuerung SC. In Fig. 4 bezeichnet CLK einen Quarzoszillator, der ein Taktsignal mit der Frequenz f0 bereitstellt. Der Quarz kann eine handelsübliche Genauigkeit von beispielsweise 20 ppm aufweisen, die Nennfrequenz f0 kann beispielsweise 1 MHz betragen. Das Bezugszeichen FD1 bezeichnet einen ersten Frequenzteiler, der das von dem Taktoszillator CLK erzeugte Taktsignal als Eingangssignal erhält und dieses Signal einer Frequenzteilung mit einem Teilerverhältnis unterzieht, das so gewählt wird, dass das Ausgangssignal des ersten Frequenzteilers FD1 eine Nennfrequenz aufweist, die der Vollbildwechsel-Nennfrequenz der von den Kameras C1, C2,..., Ci erzeugten Videosignale entspricht. Für den PAL-Standard beträgt die Vollbildwechsel-Nennfrequenz 25 Hz. Demgemäss ist der erste Frequenzteiler FD1 ausgebildet, das von dem Taktoszillator CLK gelieferte Taktsignal durch einen Wert von (f0/25) zu teilen.

Das Bezugszeichen FD2 bezeichnet einen zweiten Frequenzteiler, der dazu dient, das von dem ersten Frequenzteiler FD1 ausgegebene Signal mit einer Nennfrequenz von 25 Hz nochmals durch 4 zu teilen, um ein Signal R zu erhalten, dessen Nennperiode der Nennperiode des von den Videokameras erzeugten Videosignals nach dem PAL-Standard entspricht. Das normgerechte PAL-Signal weist eine Periodizität von 4 Vollbildern auf, woraus sich der Wert von 4 ergibt, durch welchen der zweite Frequenzteiler FD2 das von dem ersten Frequenzteiler FD1 teilt. Das so erhaltene Signal R wird von der Systemsteuerung an die Rücksetzeingänge der jeweiligen Kameras C1, C2,..., Ci geliefert, um diese 6,25 mal pro Sekunde (Nennwert) rückzusetzen.

Das von dem ersten Frequenzteiler FD1 gelieferte Signal mit einer Nennfrequenz gleich der Vollbildwechsel-Nennfrequenz dient zur Erzeugung der Auswahlsteuersignale MC für den Multiplexer derart, dass der Multiplexer mit einer Nennfrequenz gleich der Vollbildwechselfrequenz von einer Kamera zur nächsten umschaltet. Dieses Umschaltsignal wird dabei in einer festen zeitlichen Beziehung zum Rücksetzsignal R erzeugt, und zwar derart, dass die Videokameras mittels des Rücksetzsignals R zu einem Zeitpunkt rückgesetzt werden, der im wesentlichen zusammenfällt mit einem Zeitpunkt, in welchem der Multiplexer MUX von einer Kamera auf die nächste umschaltet. Dieser Zusammenhang wird in dem in Fig. 4 gezeigten Ausführungsbeispiel durch den zweiten Frequenzteiler FD2 sichergestellt.

Das Bezugszeichen CT in Fig. 4 bezeichnet eine binäre Zählschaltung mit n binären Ausgängen, so dass 2ⁿ größer oder gleich der Gesamtzahl der im System anschließbaren Videokameras C1, C2,..., Ci ist, d.h. der Anzahl der Eingänge des Multiplexers MUX. Der Zähler CT erhält als Eingangssignal das Ausgangssignal von dem ersten Frequenzteiler FD1, so dass die Ausgangssignale MC des Zählers CT im Takt der Bildwechselfrequenz am Ausgang des ersten Frequenzteiler FD1 weiterschalten.

Das Bezugszeichen IF bezeichnet eine Schnittstellenschaltung, welche vorgesehen ist, um von der Videosignalaufzeichnungseinrichtung VR eine Kanalidentifikationsinformation entgegenzunehmen, die dazu dient, dass die Videosignalaufzeichnungseinrichtung VR eine bestimmte Position in der von ihr zyklisch aufgezeichneten Sequenz von Bildern, beispielsweise Position 1, mit einem Videosignal von einem ihr bekannten Anschluss des Videosignalmultiplexers, beispielsweise dem ersten Anschluss CV1, belegt, so dass die Videosignalaufzeichnungseinrichtung VR anhand dieser Kenntnis zusammen mit der Tatsache, dass die jeweiligen Plätze der aufgezeichneten Bildfrequenz zyklisch belegt werden, die aufgezeichneten Bilder ohne weitere Kanalkennung bei der Wiedergabe den einzelnen Anzeigemonitoren oder Ausgabekanälen zuordnen kann. Dazu gibt die Videosignalaufzeichnungseinrichtung VR zyklisch ein Kanalidentifikationssignal an die Schnittstellenschaltung IF, welche dieses Signal in ein Setzsignal für den Zähler CT umwandelt. Auf den Erhalt dieses Setzsignales hin nimmt der Zähler CT eine vorbestimmte Stellung ein und wählt somit einen vorbestimmten Eingang des Multiplexers für die Durchschaltung auf den Ausgang des Multiplexers aus, sobald von dem ersten Frequenzteiler FD1 der nächste Impuls an den Zähleingang des Zählers CT gegeben wird.

Während das in Fig. 4 gezeigte Ausführungsbeispiel zwei getrennte Frequenzteiler FD1, FD2 sowie einen separaten Zähler CT aufweist, ist es möglich, diese Funktionen zum Teil oder sämtlich in einer einzigen Logikschaltung zu vereinigen. Die blockschaltbildmäßige Darstellung in Fig. 4 dient dem Zweck, die Struktur und Funktion der Systemsteuerung SC beispielhaft darzustellen, ohne dass diese Struktur den Umfang der vorliegenden Erfindung auf das dargestellte Ausführungsbeispiel beschränken soll. Ebenso sind zahlreiche Abwandlungen des Mechanismus zur Kanalidentifikation durch die Videosignalaufzeichnungseinrichtung VR denkbar. So ist es alternativ zum gerade beschriebenen Ausführungsbeispiel möglich, dass die Videosignalaufzeichnungseinrichtung VR die gesamte Steuerung des Multiplexers MUX direkt übernimmt, ohne dass die Systemsteuerung SC die Erzeugung der Auswahlsteuersignale MC für den Multiplexer MUX synchronisiert. Gemäß dieser Alternative erzeugt die Videosignalaufzeichnungseinrichtung eine Kanalidentifizierungsinformation und erzeugt daraus das Auswahlsteuersignal MC, das synchron zu den von der Videosignalaufzeichnungseinrichtung in dem am Ausgang MO des Multiplexers bereitgestellten Videosignalen detektierten Bildwechselimpulsen weiterschaltet. Gemäss einem anderen Ausführungsbeispiel der Systemsteuerung SC empfängt diese kein Kanalidentifikationssignal FI von der Videosignalaufzeichnungseinrichtung VR, sondern erzeugt ein Kanalkennungssignal entsprechend dem Auswahlsteuersignal MC, beispielsweise durch Einblenden entsprechender binärer Impulssequenzen in eine oder mehrere der ersten Zeilen nach einem Halbbildwechsel. Gemäss dieser Variante werden diese Kanalkennungsimpulse, die die Systemsteuerung SC erzeugt und in das Ausgangssignal des Multiplexers MO einmischt, dann von der Videosignalaufzeichnungseinrichtung VR entweder bei der Aufzeichnung oder bei der Wiedergabe für die Kanalidentifikation und -zuordnung verwendet.

Während in Fig. 4 ein Quarzoszillator dargestellt ist, kann alternativ dazu auch die zeitveränderliche Komponente einer Versorgungsspannung, beispielsweise die Netzfrequenz von 50 Hz in Europa bzw. 60 Hz in den USA, für die Erzeugung eines Taktsignales benutzt werden. In diesem Fall ist der erste Frequenzteiler FD1 mit einem an die Netzfrequenz angepassten Teilerverhältnis beispielsweise von 2 auszubilden, oder kann sogar vollständig entfallen, um den Multiplexer mit Halbbildfrequenz weiterzuschalten.

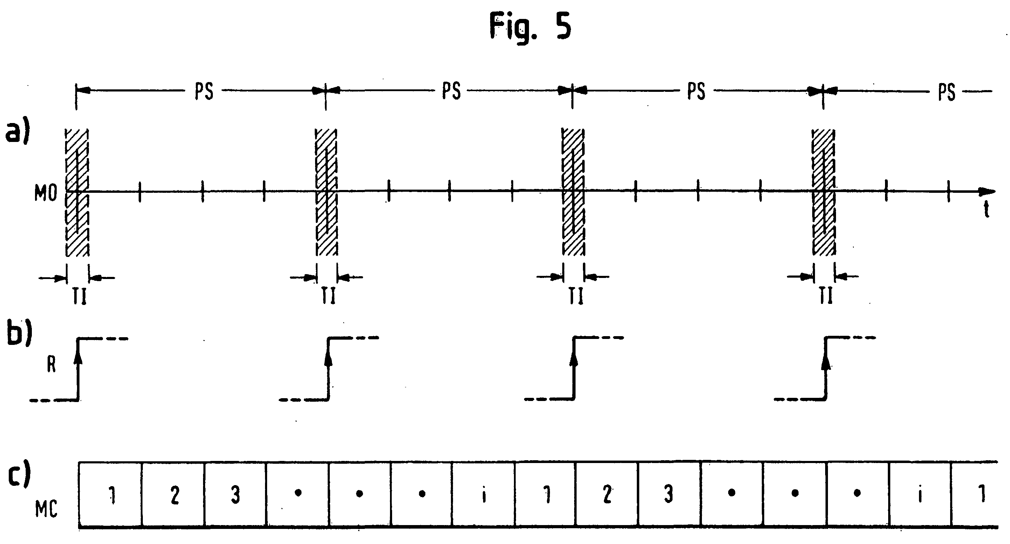

Fig. 5 zeigt ein Zeitdiagramm zur Erläuterung der Arbeitsweise des in den vorangehenden Figuren dargestellten und beschriebenen Ausführungsbeispiels. Fig. 5 besteht aus drei Bestandteilen a), b) und c). Fig. 5a) zeigt eine Zeitachse t zur Darstellung in stark vereinfachter Form des Videosignals am Ausgang MO des Videosignalmultiplexers MUX. Die durch die längeren vertikalen Linien in Fig. 5a) markierten Abschnitte bezeichnen eine vollständige PAL-Sequenz, wie durch die Buchstaben PS oberhalb der Zeitachse in Fig. 5a) angedeutet. Jede PAL-Sequenz besteht aus vier Vollbildern, wie durch die kürzeren vertikalen Striche in Fig. 5a) angedeutet ist. Wie bereits erwähnt, hat ein normgerechtes PAL-Signal, genauer die Abfolge von Synchronisationsimpulsen und Farbhilfsträger-Bursts, eine Periode von acht Halbbildern. Mit anderen Worten, die Abfolge von Synchronisationsimpulsen und Farbhilfsträger-Bursts wiederholt sich nach acht Halbbildern.

Die vertikal angeordneten, schraffierten Zonen in Fig. 5a markieren ein Toleranzintervall mit einer Breite TI, wie unterhalb der Fig. 5a angedeutet ist. Auf die Bedeutung dieses Toleranzintervalls wird im folgenden noch näher eingegangen.

Fig. 5b) zeigt schematisch eine Flanke des Rücksetzsignals R, das periodisch für die Rücksetzung der Kameras C1, C2,..., Ci des Videoüberwachungssystems erzeugt wird. In dem in Fig. 5 gezeigten Ausführungsbeispiel wird das Rücksetzsignal R mit einer Nennperiode erzeugt, die der Nennperiode der vollständigen PAL-Sequenz PS entspricht. Demgemäss sind die den Rücksetzvorgang auslösenden Flanken in Fig. 5b) in vertikaler Ausrichtung mit den die PAL-Sequenzgrenzen bezeichnenden, längeren vertikalen Strichen in Fig. 5a) dargestellt. Die Wahl einer positiven Flanke für das Rücksetzsignal R in Fig. 5b) ist selbstverständlich nicht zwingend. Die Videokameras C1, C2,..., Ci können so konstruiert sein, dass sie auf eine positive Flanke an ihren jeweiligen Rücksetzeingängen RT hin, wie in Fig. 2 gezeigt, einen Rücksetzvorgang durchführen. Genauso ist es möglich, die jeweiligen Videokameras so zu konstruieren, dass der Rücksetzvorgang auf eine negative Flanke hin oder signalpegelabhängig ausgelöst wird. All diese Alternativen sind für den Fachmann im Lichte der vorliegenden Erfindung selbstverständlich.

Fig. 5c) stellt schematisch den seitlichen Verlauf des Auswahlsteuersignals MC dar. Dabei stellt Fig. 5c) keine Signalamplituden dar, sondern in schematischer Form den Binärwert des Auswahlsteuersignals, der den jeweiligen Eingang 1 bis i des Multiplexers MUX bestimmt, der gegenwärtig auf den Ausgang MO des Multiplexers MUX geschaltet wird. Wie bereits im Zusammenhang mit Fig. 4 erläutert wurde, wird das Rücksetzsignal R und das Auswahlsignal MC in dem in Fig. 4 dargestellten Ausführungsbeispiel von der Systemsteuerung SC synchron erzeugt, derart, dass das Rücksetzsignal R mit dem Umschaltzeitpunkt von einem Eingang des Multiplexers MUX auf den nächsten im wesentlichen zusammenfällt. Demgemäss sind in Fig. 5c) die Übergänge von einem Signaleingang zum nächsten des Multiplexers MUX in vertikaler Ausrichtung mit den jeweiligen, die Rücksetzung der Kameras bewirkenden Flanken des Rücksetzsignals R gezeigt.

Im Betrieb unterliegen die von den jeweiligen Videokameras C1, C2,..., Ci erzeugten Videosignale jeweils zeitlichen Toleranzen, die von der Präzision der in den jeweiligen Kameras vorhandenen Quarze bestimmt werden. Insbesondere aus Kostengründen ist es vorteilhaft, in den Kameras handelsübliche Quarze mit üblichen Toleranzen einzusetzen. Demgemäss fällt die tatsächliche Periode der von den jeweiligen Kameras erzeugten PAL-Sequenzen in ein gegebenes Toleranzintervall TI, um die Nennperiode der PAL-Sequenz herum, wobei die Breite des in Fig. 5a) schraffiert dargestellten Toleranzintervalls von der Genauigkeit der verwendeten Quarze in den Kameras abhängt. Wenn also alle Kameras durch den Rücksetzimpuls R gleichzeitig mit der Erzeugung einer PAL-Sequenz beginnen, so liegt das Ende der PAL-Sequenz bei den jeweiligen Kameras innerhalb des schraffiert dargestellten Toleranzintervalls TI in Fig. 5a). Die Toleranzintervalle für die Vollbildgrenzen, in Fig. 5a) durch die kleinen vertikalen Striche markiert, sind ein linearer Bruchteil des Toleranzintervalls TI. Beispielsweise ist das Toleranzintervall für die erste Vollbildgrenze 1/4 des Toleranzintervalls TI, während das Toleranzintervall für die dritte Vollbildgrenze 3/4 TI breit ist.

Jedoch unterliegt nicht nur das von den jeweiligen Videokameras erzeugte Videosignal zeitlichen Toleranzen, die durch Toleranzen der in den Kameras eingesetzten Quarze und den Freilauf der Kameras zwischen den jeweiligen Rücksetzimpulsen bedingt sind, sondern auch die Rücksetzimpulse R selbst werden von der Systemsteuerung SC mit einer Periode erzeugt, die gewissen Toleranzen unterworfen ist. Dabei wird gemäss dem in Fig. 5 gezeigten Ausführungsbeispiel der Rücksetzimpuls mit solch einer Periode erzeugt, dass sie innerhalb des Toleranzintervalls TI für die Periode der PAL-Sequenz PS der von den jeweiligen Videokameras erzeugten Videosignale liegt. So weit die Genauigkeit der Periode des Rücksetzsignals R dieser Bedingung genügt, wird durch die Ungenauigkeit der Rücksetzsignalperiode innerhalb dieser Grenzen die maximale zeitliche Verwerfung, die in dem Videosignal am Ausgang MO des Multiplexers MUX auftreten kann, nicht größer als das durch die Qualität der in den Kameras eingesetzten Quarze bestimmte Toleranzintervall TI. Diese Bedingung bei der Erzeugung des Rücksetzsignals R kann ohne weiteres dadurch eingehalten werden, dass für den Taktoszillator CLK in der Systemsteuerung SC in Fig. 4 ein Quarz eingesetzt wird, dessen Toleranz nicht schlechter ist als die in den Kameras eingesetzten Quarze. In dem in Fig. 5 gezeigten Ausführungsbeispiel kommen bevorzugt handelsübliche Quarze mit einer Genauigkeit von 20 ppm zum Einsatz, so dass für die Systemsteuerung SC ein Quarz mit derselben Genauigkeit von 20 ppm ausreichend ist.

Die Videosignaldekodierschaltung in der in Fig. 1 gezeigten Videosignalaufzeichnungseinrichtung VR ist demgemäss so eingestellt, so schnell auf die in dem Videosignal enthaltenen Zeilenwechselimpulse und Bursts für die Farbhilfsträgerrückgewinnung zu rasten, dass sie zeitliche Verwerfungen in der Größe des in Fig. 5 gezeigten Toleranzintervalls TI in den Videosignalen am Ausgang MO des Multiplexers MUX verarbeiten kann, ohne dass dadurch Bildstörungen entstehen.

Während vorangehend ein bevorzugtes Ausführungsbeispiel der vorliegenden Erfindung unter Bezugnahme auf die Zeichnungen beschrieben wurde, ergeben sich daraus für den Fachmann zahlreiche Modifikationen, ohne dabei den Umfang und die Tragweite der vorliegenden Erfindung zu verlassen. Während das beschriebene Ausführungsbeispiel auf dem PAL-Signalformat beruht, ist es ebenso möglich, das NTSC-Signalformat oder irgendein anderes Videosignalformat zu verwenden. Während in dem beschriebenen Ausführungsbeispiel das Rücksetzsignal R mit eine Nennperiode erzeugt wird, die der Nennperiode der PAL-Sequenz entspricht, ist es ebenfalls möglich, das Rücksetzsignal R mit einer Periode zu erzeugen, die ein ganzzahliges Vielfaches, etwa das 2-fache, 3-fache oder 4-fache, der Nennperiode einer PAL-Sequenz ist. Falls NTSC-Signale verwendet werden, kann die Nennperiode der Rücksetzsignale R der Nennperiode des Vollbildwechsels oder ebenso einem ganzzahligen Vielfachen davon entsprechen. Die in den Figuren dargestellten Gruppierungen der jeweiligen Funktionsblöcke dienen lediglich der Erläuterung des beschriebenen Ausführungsbeispiels, ohne dass die vorliegende Erfindung auf diese spezielle Gruppierung beschränkt ist. Beispielsweise ist es möglich, den in Fig. 1 als separaten Block dargestellten Multiplexer MUX in die Videosignalaufzeichnungseinrichtung VR zu integrieren. Die Systemsteuerung SC kann in den Multiplexer MUX integriert sein, oder ebenfalls in die Videosignalaufzeichnungseinrichtung VR. Die Videosignalaufzeichnungseinrichtung VR kann als Videorecorder in Form eines Einzelgerätes oder eines Einschubs ausgebildet sein. Ebenso kann die Videosignalaufzeichnungseinrichtung VR und ggf. die darin integrierten Komponenten Systemsteuerung SC und/oder der Multiplexer MUX als Erweiterungskarte für einen Computer, etwa einen Personal Computer, ausgebildet sein und soweit vorhanden, auf die im Computer sowieso vorhandenen Komponenten, beispielsweise die Festplatte, zurückgreifen, so dass in diesem Fall eine separate Massenspeichereinrichtung SM nicht erforderlich ist. Die Videosignalaufzeichnungseinrichtung VR kann Einrichtungen für die Wiedergabe der aufgezeichneten Videosignale aufweisen, dies ist jedoch nicht unbedingt erforderlich. Das Massenspeichermedium SM in Fig. 1 kann als Wechselmedium ausgebildet sein, welches für die Wiedergabe der aufgezeichneten Signale in ein separat vorgesehenes Wiedergabegerät eingelegt oder eingesetzt werden kann. Gemäss einem bevorzugten Ausführungsbeispiel komprimiert die Videosignalaufzeichnungseinrichtung die digitalisierten Videosignale der Videokameras C1,..., Ci und speichert diese auf dem Massenspeichermedium SM in komprimierter Form ab.

Bezugszeichen in den Patentansprüchen dienen dem besseren Verständnis. Sie dürfen nicht zu einer einschränkenden Auslegung der Patentansprüche herangezogen werden.

## Patentansprüche

1. Videoüberwachungssystem, welches eine Vielzahl von Videokameras (C1, C2,..., Ci) umfasst, sowie einen Videosignalumschalter (MUX) mit einer Vielzahl von Eingängen (CV1, CV2,..., CVi) und mindestens einem Ausgang (MO), eine Steuerungseinrichtung (SC) zur Steuerung des Videosignalumschalters (MUX) und der Videokameras (C1, C2,..., Ci), und eine Videosignal-Aufzeichnungseinrichtung (VR), welche mit dem Ausgang (MO) des Videosignalumschalters (MUX) verbunden ist;
wobei die Videokameras (C1, C2,..., Ci) jeweils umfassen:
- eine Bildwandlereinrichtung (CCD) zum Aufnehmen von Bildern und Umwandeln der aufgenommenen Bilder in ein Bildsignal mit zumindest einer Luminanzkomponente,
- eine Impulserzeugungseinrichtung (TC) zur freilaufenden Erzeugung einer Abfolge von Zeilenund Bildwechselimpulsen, wobei die Periode (PS) der Abfolge von einer vorbestimmten Nennperiode innerhalb eines gegebenen Toleranzintervalls (TI) abweichen kann;
- eine Einrichtung (SP) zum Kombinieren des Bildsignals von der Bildwandlereinrichtung und der Abfolge von Zeilen- und Bildwechselimpulsen in ein Verbund-Videosignal;
- wobei die Impulserzeugungseinrichtung (TC) ausgebildet ist, auf den Empfang eines externen Rücksetzimpulses (R) hin einen vorbestimmten Ausgangszustand einzunehmen und die Abfolge von Zeilen- und Bildwechselimpulsen beginnend mit dem vorbestimmten Ausgangszustand erneut zu erzeugen;
wobei der Videosignalumschalter (MUX) Einrichtungen zum Anlegen des an einem ausgewählten der Videosignalumschaltereingänge (CV1, CV2,..., CVi) anliegenden Signals an den Ausgang des Videosignalumschalters (MUX) gemäß einem Auswahlsteuersignal (MC) umfasst, um am Ausgang ein Videosignal (MO) mit einer zyklischen Abfolge von Videosignalausschnitten der jeweiligen Videokameras bereitzustellen, die durch die Abweichungen der Perioden der von den jeweiligen Kameras erzeugten Abfolgen von der Nennperiode bewirkte zeitliche Verwerfungen aufweisen;
wobei die Steuerungseinrichtung (SC) einen Taktgenerator (CLK, FD1, FD2) zur Erzeugung eines Rücksetzimpulses umfasst, um diesen den Videokameras (C1, C2,..., Ci) gemeinsam zuzuleiten;
wobei die Videoaufzeichnungseinrichtung (VR) eine Videosignaldecodierschaltung zum Decodieren des von dem Videosignalumschalter (MUX) gelieferten Videosignals aufweist, die ausgebildet ist, so schnell auf die in dem Videosignal enthaltenen Zeilenwechselimpulse zu rasten, dass sie das Videosignal (MO) mit den Videosignalausschnitten der Videokameras (C1, ..., Ci) decodieren kann.

2. Videoüberwachungssystem nach Anspruch 1, **dadurch gekennzeichnet, dass** die Auswahlsignale (MC) für den Videosignalumschalter (MUX) so erzeugt werden, dass die Weiterschaltperiode von einem Eingang des Videosignalumschalters zum nächsten das 1/M-fache der Rücksetzperiode ist, wobei M ganzzahlig größer oder gleich 1 ist.

3. Videoüberwachungssystem nach Anspruch 2, **dadurch gekennzeichnet, dass** M gleich der Anzahl von Vollbildern pro Periode (PS) des die Abfolge von die Zeilen- und Bildwechselimpulse enthaltenden periodischen Signals ist.

4. Videoüberwachungssystem nach einem der vorangehenden Ansprüche, **gekennzeichnet durch** einen Auswahlsignal-Erzeugungsschaltkreis, der ausgebildet ist, die in dem von dem Videosignalumschalter (MXU) gelieferten Videosignal (MO) enthaltene Bildwechselsynchronisationsinformation zu verarbeiten, um die Auswahlsteuersignale für den Videosignalumschalter zu erzeugen.

5. Videoüberwachungssystem nach einem der Ansprüche 1 bis 3, **dadurch gekennzeichnet, dass** der Taktgenerator (CLK, FD1, FD2) einen Auswahlsignal-Erzeugungsschaltkreis (CT) enthält und ausgebildet ist, die Auswahlsignale für die Steuerung des Videosignalumschalters (MUX) synchron zu den Rücksetzimpulsen (R) zu erzeugen.

6. Videoüberwachungssystem nach einem der vorangehenden Ansprüche, **dadurch gekennzeichnet, dass** der Taktgenerator ausgebildet ist, den Rücksetzimpuls aus einer zeitveränderlichen Komponente einer Versorgungsspannung abzuleiten.

7. Videoüberwachungssystem nach einem der vorangehenden Ansprüche, **dadurch gekennzeichnet, dass** die Videodecodierschaltung ausgebildet ist, das von dem Videosignalumschalter (MUX) gelieferte Signal zu digitalisieren, das digitalisierte Signal zu decodieren und in digitaler Form aufzuzeichnen.

8. Videoüberwachungssystem nach einem der vorangehenden Ansprüche, **dadurch gekennzeichnet, dass** der Videosignalumschalter (MUX) in die Videoaufzeichnungseinrichtung integriert ist.

9. Videoüberwachungssystem nach einem der vorangehenden Ansprüche, **gekennzeichnet durch** eine Einrichtung zum Erzeugen von Kameraidentifizierungsinformation, und zum Hinzufügen dieser Information in das von der Videoaufzeichnungseinrichtung aufgezeichnete Signal.

10. Videoüberwachungssystem nach Anspruch 9, **dadurch gekennzeichnet, dass** der Multiplexer eine Steuereinrichtung aufweist, die ausgebildet ist, die Kameraidentifizierungsinformation abhängig von dem momentan auf den Ausgang (MO) des Multiplexers (MUX) durchgeleiteten Multiplexereingang (CV1,...,CVi) zu erzeugen und an die Videoaufzeichnungseinrichtung zu leiten.

11. Videoüberwachungssystem nach Anspruch 10, **dadurch gekennzeichnet, dass** die Steuereinrichtung des Multiplexers (MUX) derart ausgebildet ist, dass sie die Häufigkeit, mit welcher der Multiplexer einen jeweiligen Eingang auf den Ausgang durchschaltet, für den jeweiligen Eingang individuell vom Benutzer einstellbar steuert.

12. Videoüberwachungssystem nach einem der vorangehenden Ansprüche, **dadurch gekennzeichnet, dass** das Bildsignal neben der Luminanzkomponente eine Chromakomponente enthält; und die Impulserzeugungseinrichtungen (TC) der Kameras ausgebildet sind, in der Abfolge von Zeilen- und Bildwechselimpulsen auch ein Burstsignal zur Farbhilfsträgerrückgewinnung zu erzeugen.

13. Videoüberwachungssystem nach Anspruch 12, **dadurch gekennzeichnet, dass** die von der Impulserzeugungseinrichtung erzeugte Abfolge von Burstsignal, Zeilen- und Bildwechselimpulsen der PAL Norm mit einer Nennperiode von 1/(6,25 Hz) oder der NTSC Norm mit einer Nennperiode von 1/(15 Hz) oder der SECAM Norm mit einer Nennperiode von 1/(6,25 Hz) entspricht.

14. Videoüberwachungssystem nach einem der vorangehenden Ansprüche, **dadurch gekennzeichnet, dass** jede der Videokameras (C1,..., Ci) mit ihrem zugeordneten Eingang des Videosignalumschalters (MXU) über ein Fast-Ethernet Kabel verbindbar ist, das neben dem Videosignal von der Kamera auch die Versorgungsspannung sowie das Rücksetzsignal an die angeschlossene Kamera überträgt.

15. Videoüberwachungssystem nach Anspruch 14, **dadurch gekennzeichnet, dass** der Wellenwiderstand des Kabels 100 Ohm beträgt, und die Abschlussimpedanz der jeweiligen Eingänge des Videosignalumschalters an den Wellenwiderstand von 100 Ohm angepasst ist.

16. Videoüberwachungssystem nach Anspruch 14 oder 15, **dadurch gekennzeichnet, dass** für den Anschluss jeder der Kameras an das Fast-Ethernet Kabel sowie für den Anschluss der jeweiligen Kabel an den Videosignalumschalter ein Kabel-Steckersystem nach dem RJ-45 Standard vorgesehen ist.

17. Videoüberwachungssystem nach einem der vorangehenden Ansprüche, **dadurch gekennzeichnet, dass** die Videosignal-Decodierschaltung umfasst:
- eine Extraktionsschaltung zum Wiedergewinnen der Horizontal- und Vertikalzeitgabe aus dem gemultiplexten Ausgangssignal (MO) des Videosignalumschalters (MUX) und Erzeugen von Synchronisationssignalen auf der Grundlage eines zeitlich begrenztes Signalfensters aus dem zu decodierenden Videosignal, das nicht größer ist als die Dauer der Rasterwechselimpulsfolge zwischen den jeweiligen Halbbildern.

18. Videoüberwachungssystem nach einem der vorangehenden Ansprüche, **dadurch gekennzeichnet, dass** die Videodecodierschaltung ausgebildet ist, zur Extraktion der Horizontalsynchronisation in einem Fast Locking Modus zu arbeiten.

19. Videoüberwachungssystem nach einem der vorangehenden Ansprüche, **dadurch gekennzeichnet, dass**
- die von den jeweiligen Videokameras (C1,..., Ci) erzeugten Videosignale Farbvideosignale sind, die Bursts für die Farbhilfsträgerrückgewinnung enthalten;
- und die Videosignaldecodierschaltung ausgebildet ist, den Farbhilfsträger in einem Fast Locking Modus zu extrahieren.

20. Videoüberwachungssystem nach einem der vorangehenden Ansprüche, **dadurch gekennzeichnet, dass**
- die jeweiligen Videokameras (C1,..., Ci) ausgebildet sind, Farbvideosignale zu erzeugen, die Bursts für die Farbhilfsträgerrückgewinnung enthalten, wobei zwischen den jeweiligen Halbbildern ein mehrere Zeilen langes Zeitintervall vorhanden ist, in welchem kein Burst erzeugt wird; und
- die Videodecodierschaltung ausgebildet ist, aus den in dem zu decodierenden Videosignal enthaltenen Farbhilfsträgerbursts einen Farbhilfsträger für die Decodierung der Farbinformation zu extrahieren, wobei die Anzahl von aufeinanderfolgenden Zeilen, die die Rückgewinnung des Farbhilfsträgers beeinflussen, nicht größer ist als das Zeitintervall zwischen zwei Halbbildern, in dem kein Burst vorhanden ist.

21. Videoüberwachungssystem nach einem der vorangehenden Ansprüche, **dadurch gekennzeichnet, dass** die Videosignalaufzeichnungseinrichtung ausgebildet ist, dass decodierte Videosignal digital auf ein Videoband oder auf eine Festplatte, CD-ROM oder DVD komprimiert oder unkomprimiert aufzuzeichnen.

22. Videoüberwachungssystem nach einem der vorangehenden Ansprüche, **dadurch gekennzeichnet, dass** der Taktgenerator (CLK, FD1, FD2) ausgebildet ist,
- den Rücksetzimpuls mit einer Periode zu erzeugen, die so gewählt ist, dass das 1/N-fache derselben innerhalb des gegebenen Toleranzintervals für die Periode der Abfolge von Zeilen- und Bildwechselimpulsen liegt, wobei N ganzzahlig und größer oder gleich 1 ist; und
- die Videosignaldecodierschaltung ausgebildet ist, so schnell auf die in dem Videosignal enthaltenen Zeilenwechselimpulse zu rasten, dass sie Videosignale decodieren kann, die zeitliche Verwerfungen in der Größe des N-fachen des gegebenen Toleranzintervals aufweisen.

23. Videoüberwachungssystem nach Anspruch 22, **dadurch gekennzeichnet, dass** die Videokameras (C1,..., Ci) ausgebildet sind, Videosignale nach der PAL Norm zu erzeugen, und N gleich 1 oder 2 ist.

24. Videoüberwachungssystem nach Anspruch 22, **dadurch gekennzeichnet, dass** die Videokameras (C1,..., Ci) ausgebildet sind, Videosignale nach der NTSC Norm zu erzeugen, und N gleich 1, 2, 3 oder 4 ist.

25. Videosignalaufzeichnungsvorrichtung (VR) zum Aufzeichnen eines von einem Videosignalumschalter (MUX) eines Videoüberwachungssystems nach einem der Ansprüche 1 bis 24 ausgegebenen Videosignals (MO), das eine zyklische Abfolge von Videosignalausschnitten von den jeweiligen Videokameras (C1, C2, ..., Ci) des Videoüberwachungssystems aufweist,
wobei die Videosignalausschnitte zeitliche Verwerfungen aufweisen, die durch Abweichungen der Perioden der von den jeweiligen Kameras erzeugten Abfolgen von Zeilenund Bildwechselimpulsen von der Nennperiode (PS) bewirkt werden,
mit einer Videosignaldecodierschaltung zum Decodieren des von dem Videosignalumschalter gelieferten Videosignals (MO), die ausgebildet ist, so schnell auf die in dem Videosignal (MO) enthaltenen Zeilenwechselimpulse zu rasten, dass sie das von dem Videosignalumschalter (MUX) ausgegebene Videosignal (MO) mit den zeitlich verworfenen Videosignalausschnitten der jeweiligen Videokameras decodieren kann.

## Claims

1. Video monitoring system which includes a plurality of video cameras (C1, C2, ..., Ci), and a video signal switch (MUX) with a plurality of inputs (CV1, CV2, ..., CVi) and at least one output (MO), a control device (SC) for controlling the video signal switch (MUX) and the video cameras (C1, C2, ..., Ci), and a video signal recording device (VR) which is connected to the output (MO) of the video signal switch (MUX);
wherein the video cameras (C1, C2, ..., Ci) each include:
- an image converter device (CCD) for receiving images and converting the received images to a picture signal with at least one luminance component,
- a pulse generating device (TC) for the unsolicited generation of a sequence of line and picture change pulses, wherein the period (PS) of the sequence can deviate from a predetermined nominal period within a given tolerance interval (TI);
- a device (SP) for combining the picture signal of the image converter device and the sequence of line and picture change pulses, into a combined video signal;
- wherein the pulse generating device (TC) is designed, upon the reception of an external reset pulse (R), to adopt a predetermined initial state and again generate the sequence of line and picture change pulses, beginning with the predetermined initial state;
wherein the video signal switch (MUX) includes devices for applying the signal which is at a selected one of the video signal switch inputs (CV1, CV2, ..., CVi), to the output of the video signal switch (MUX) according to a selection control signal (MC), in order to provide at the output a video signal (MO) with a cyclic sequence of video signal segments of the respective video cameras which have time distortions caused by the deviations of the periods of the sequences generated by the respective cameras, from the nominal period;
wherein the control device (SC) includes a clock generator (CLK, FD1, FD2) for generating a reset pulse, for delivering the latter to the video cameras (C1, C2, ..., Ci) together;
wherein the video recording device (VR) has a video signal decoding circuit for decoding the video signal delivered by the video signal switch (MUX), which is designed to latch so rapidly on to the line change pulses contained in the video signal that it can decode the video signal (MO) with the video signal segments of the video cameras (C1, ..., Ci).

2. Video monitoring system according to claim 1, **characterised in that** the selection signals (MC) for the video signal switch (MUX) are generated in such a way that the relay period from one input of the video signal switch to the next is 1/M times the reset period, where M is an integer/greater than or equal to 1.

3. Video monitoring system according to claim 2, **characterised in that** M is equal to the number of complete pictures per period (PS) of the periodic signal containing the sequence of line and picture change pulses.

4. Video monitoring system according to any of the preceding claims, **characterised by** a selection signal generating circuit which is designed to process the picture change synchronisation information contained in the video signal (MO) delivered by the video signal switch (MXU), in order to generate the selection control signals for the video signal switch.

5. Video monitoring system according to any of claims 1 to 3, **characterised in that** the clock generator (CLK, FD1, FD2) contains a selection signal generating circuit (CT) and is designed to generate the selection signals for control of the video signal switch (MUX) synchronously with the reset pulses (R).

6. Video monitoring system according to any of the preceding claims, **characterised in that** the clock generator is designed to derive the reset pulse from a variable-time component of a supply voltage.

7. Video monitoring system according to any of the preceding claims, **characterised in that** the video decoding circuit is designed to digitise the signal delivered by the video signal switch (MUX), to decode the digitised signal and to record it in digital form.

8. Video monitoring system according to any of the preceding claims, **characterised in that** the video signal switch (MUX) is integrated in the video recording device.

9. Video monitoring system according to any of the preceding claims, **characterised by** a device for generating camera identification information, and for adding this information to the signal recorded by the video recording device.

10. Video monitoring system according to claim 9, **characterised in that** the multiplexer has a control device which is designed to generate the camera identification information as a function of the multiplexer input (CV1, ..., CVi) instantaneously switched through to the output (MO) of the multiplexer (MUX), and to conduct it to the video recording device.

11. Video monitoring system according to claim 10, **characterised in that** the control device of the multiplexer (MUX) is designed so as to control the frequency at which the multiplexer switches a respective input through to the output, in a manner individually adjustable by the user for the respective input.

12. Video monitoring system according to any of the preceding claims, **characterised in that** the picture signal contains, in addition to the luminance component, a chroma component; and the pulse generating devices (TC) of the cameras are designed also to generate a burst signal for auxiliary colour carrier recovery in the sequence of line and picture change pulses.

13. Video monitoring system according to claim 12, **characterised in that** the sequence of burst signal, line and picture change pulses which is generated by the pulse generating device conforms to the PAL standard with a nominal period of 1/(6.25 Hz) or the NTSC standard with a nominal period of 1/(15 Hz) or the SECAM standard with a nominal period of 1/(6.25 Hz).

14. Video monitoring system according to any of the preceding claims, **characterised in that** each of the video cameras (C1, ..., Ci) can be connected to its associated input of the video signal switch (MXU) by a Fast Ethernet cable which, in addition to the video signal from the camera, also transmits the supply voltage and the reset signal to the connected camera.

15. Video monitoring system according to claim 14, **characterised in that** the wave impedance of the cable is 100 ohms, and the terminating impedance of the respective inputs of the video signal switch is adapted to the wave impedance of 100 ohms.

16. Video monitoring system according to claim 14 or 15, **characterised in that**, for the connection of each of the cameras to the Fast Ethernet cable and for the connection of the respective cables to the video signal switch, a cable connector system according to the RJ-45 standard is provided.

17. Video monitoring system according to any of the preceding claims, **characterised in that** the video signal decoding circuit includes:
- an extraction circuit for recovering the horizontal and vertical timing from the multiplexed output signal (MO) of the video signal switch (MUX) and generating synchronisation signals on the basis of a limited-time signal window from the video signal to be decoded, which is not greater than the duration of the frame repetition pulse sequence between the respective fields.

18. Video monitoring system according to any of the preceding claims, **characterised in that** the video decoding circuit is designed to operate in a fast locking mode for extraction of the horizontal synchronisation.

19. Video monitoring system according to any of the preceding claims, **characterised in that**
- the video signals generated by the respective video cameras (C1, ..., Ci) are colour video signals which contain bursts for auxiliary colour carrier recovery;
- and the video signal decoding circuit is designed to extract the auxiliary colour carrier in a fast locking mode.

20. Video monitoring system according to any of the preceding claims, **characterised in that**
- the respective video cameras (C1, ..., Ci) are designed to generate colour video signals which contain bursts for auxiliary colour carrier recovery, wherein between the respective fields there is a time interval several lines long in which no burst is generated; and
- the video decoding circuit is designed to extract an auxiliary colour carrier from the auxiliary colour carrier bursts contained in the video signal to be decoded, for decoding the colour information, wherein the number of successive lines which influence recovery of the auxiliary colour carrier is not greater than the time interval between two fields in which there is no burst.

21. Video monitoring system according to any of the preceding claims, **characterised in that** the video signal recording device is designed to record the decoded video signal digitally on a video tape or on a hard disc, CD-ROM or DVD in compressed or uncompressed form.

22. Video monitoring system according to any of the preceding claims, **characterised in that** the clock generator (CLK, FD1, FD2) is designed
- to generate the reset pulse with a period which is selected such that 1/N times this period lies within the given tolerance interval for the period of the sequence of line and picture change pulses, where N is an integer and greater than or equal to 1; and
- the video signal decoding circuit is designed to latch so rapidly on to the line change pulses contained in the video signal that it can decode video signals which exhibit time distortions of the order of N times the given tolerance interval.

23. Video monitoring system according to claim 22, **characterised in that** the video cameras (C1, ..., Ci) are designed to generate video signals according to the PAL standard, and N is equal to 1 or 2.

24. Video monitoring system according to claim 22, **characterised in that** the video cameras (C1, ..., Ci) are designed to generate video signals according to the NTSC standard, and N is equal to 1, 2, 3 or 4.

25. Video signal recording device (VR) for recording a video signal (MO) which is outputted by a video signal switch (MUX) of a video monitoring system according to any of claims 1 to 24 and which has a cyclic sequence of video signal segments of the respective video cameras (C1, C2, ..., Ci) of the video monitoring system,
wherein the video signal segments have time distortions which are caused by deviations of the periods of the sequences of line and picture change pulses generated by the respective cameras, from the nominal period (PS),
with a video signal decoding circuit for decoding the video signal (MO) delivered by the video signal switch, which is designed to latch so rapidly on to the line change pulses contained in the video signal (MO) that it can decode the video signal (MO) outputted by the video signal switch (MUX) with the distorted-time video signal segments of the respective video cameras.

## Revendications

1. Système de surveillance vidéo, comprenant une pluralité de caméras vidéo (C1, C2, ..., Ci), ainsi qu'un commutateur de signal vidéo (MUX) ayant une pluralité d'entrées (CV1, CV2, ..., CVi) et au moins une sortie (MO), un dispositif de commande (SC) pour la commande du commutateur de signal vidéo (MUX) et des caméras vidéo (C1, C2, ..., Ci), et un dispositif d'enregistrement de signal vidéo (VR) relié à la sortie (MO) du commutateur de signal vidéo (MUX) ;
les caméras vidéo (C1, C2, ..., Ci) comprenant chacune :
- un dispositif de conversion d'images (CCD) pour enregistrer des images et convertir les images enregistrées en un signal d'images ayant au moins une composante de luminance,
- un dispositif générateur d'impulsions (TC) pour générer en roue libre une succession d'impulsions de changement de lignes et d'images, la période (PS) de la succession pouvant être différente d'une période nominale prédéterminée, dans les limites d'un intervalle de tolérance (TI) donné ;
- un dispositif (SP) pour combiner le signal d'image venant du dispositif de conversion d'images et la succession d'impulsions de changement de lignes et d'images en un signal vidéo composite ;
- où le dispositif de génération d'impulsions (TC) est réalisé, en prenant, à réception d'une impulsion de remise à l'état initial (R) externe, un état initial prédéterminé et en générant de nouveau la succession d'impulsions de changement de lignes et d'images, en commençant par l'état initial prédéterminé ;
où le commutateur de signal vidéo (MUX) comprend des dispositifs pour appliquer le signal, appliqué à l'une, sélectionnée, des entrées de commutation de signal vidéo (CV1, CV2, ..., CVi) à la sortie du commutateur de signal vidéo (MUX), selon un signal de commande de sélection (MC), pour, à la sortie, fournir un signal vidéo (MO) ayant une succession cyclique de parties limitées de signal vidéo des caméras vidéo respectives, présentant des distorsions temporelles provoquées par les écarts des périodes entre les successions générées par les caméras respectives et la période nominale ;
où le dispositif de commande (SC) comprend un générateur de cadencement (CLK, FD1, FD2) pour générer une impulsion de remise à l'état initial afin d'amener celle-ci conjointement aux caméras vidéo (C1, C2, ..., Ci) ;
où le dispositif d'enregistrement vidéo (VR) présente un circuit de décodage de signal vidéo afin de décoder le signal vidéo fourni par le commutateur de signal vidéo (MUX), réalisé de manière à tramer les impulsions de changement de lignes contenues dans le signal vidéo à une rapidité tel qu'il peut décoder le signal vidéo (MO) avec les parties limitées de signal vidéo des caméras vidéo (C1, ..., Ci).

2. Système de surveillance vidéo selon la revendication 1, **caractérisé en ce que** les signaux de sélection (MC) pour le commutateur de signal vidéo (MUX) sont générés de manière que la période de re-commutation d'une entrée du commutateur de signal vidéo à celle immédiatement suivante, soit le multiple par 1/M de la période de remise à l'état initial, sachant que M est un nombre entier/supérieur ou égal à 1.

3. Système de surveillance vidéo selon la revendication 2, **caractérisé en ce que** M est égal au nombre d'images pleines par période (PS) du signal périodique contenant les impulsions de changement de lignes et d'images.

4. Système de surveillance vidéo selon l'une des revendications précédentes, **caractérisé par** un circuit de génération de signal de sélection, réalisé pour traiter l'information de synchronisation de changement d'images, contenue dans le signal vidéo (MO) fourni par le commutateur de signal vidéo (MUX), pour produire les signaux de commande de sélection destinés au commutateur de signal vidéo.

5. Système de surveillance vidéo selon l'une des revendications 1 à 3, **caractérisé en ce que** le générateur de cadencement (CLK, FD1, FD2) contient un circuit de génération de signal de sélection (CT) et est réalisé pour générer les signaux de sélection pour la commande du commutateur de signal vidéo (MUX), de façon synchrone aux impulsions de remise à l'état initial (R).

6. Système de surveillance vidéo selon l'une des revendications précédentes, **caractérisé en ce que** le générateur de cadencement est réalisé pour dériver l'impulsion de remise à l'état initial à partir d'une composante, temporellement variable, d'une tension d'alimentation.

7. Système de surveillance vidéo selon l'une des revendications précédentes, **caractérisé en ce que** le circuit de décodage vidéo est réalisé pour numériser le signal fourni par le commutateur de signal vidéo (MUX), décoder le signal numérisé et l'enregistrer sous forme numérique.

8. Système de surveillance vidéo selon l'une des revendications précédentes, **caractérisé en ce que** le commutateur de signal vidéo (MUX) est intégré dans le dispositif d'enregistrement vidéo.

9. Système de surveillance vidéo selon l'une des revendications précédentes, **caractérisé par** un dispositif de génération d'information d'identification de caméra, et pour introduire cette information dans le signal enregistré par le dispositif d'enregistrement vidéo.

10. Système de surveillance vidéo selon la revendication 9, **caractérisé en ce que** le multiplexeur présente un dispositif de commande, réalisé pour générer l'information d'identification de caméra en fonction de l'entrée de multiplexeur (CV1, ..., CVi), passée momentanément sur la sortie (MO) du multiplexeur (MUX), et la transmettre au dispositif d'enregistrement vidéo.

11. Système de surveillance vidéo selon la revendication 10, **caractérisé en ce que** le dispositif de commande du multiplexeur (MUX) est réalisé de manière qu'il commande la fréquence, à laquelle le multiplexeur commute pour faire passer une entrée respective sur la sortie, pour l'entrée respective, de façon réglable individuellement par l'utilisateur.

12. Système de surveillance vidéo selon l'une des revendications précédentes, **caractérisé en ce que** le signal d'image contient outre la composante de luminance, une composante de chrominance ; et les dispositifs de génération d'impulsions (TC) des caméras sont réalisés pour produire, dans l'ordre de succession des impulsions de changement de lignes et d'images, également un signal de rafale destiné à la récupération d'une sous-porteuse de chrominance.

13. Système de surveillance vidéo selon la revendication 12, **caractérisé en ce que** la succession, produite par le dispositif de génération d'impulsions, du signal de rafale, des impulsions de changement de lignes et d'images correspond à la norme PAL avec une période nominale de 1/(6,25 Hz) ou à la norme NTSC avec une période nominal de 1/(15 Hz) ou à la norme SECAM avec une période nominale de 1/(6,25 Hz).

14. Système de surveillance vidéo selon l'une des revendications précédentes, **caractérisé en ce que** chacune des caméras vidéo (C1, C2, ..., Ci) est susceptible d'être reliée à son entrée associée du commutateur de signal vidéo (MUX), par l'intermédiaire d'un câble Fast-Ethernet, qui outre le signal vidéo venant de la caméra transmet également la tension d'alimentation ainsi que le signal de remise à l'état initial à la caméra raccordée.

15. Système de surveillance vidéo selon la revendication 14, **caractérisé en ce que** l'impédance caractéristique du câble est de 100 Ohms, et la résistance de terminaison des entrées respectives du commutateur de signal vidéo est adaptée à l'impédance caractéristique de 100 Ohms.

16. Système de surveillance vidéo selon la revendication 14 ou 15, **caractérisé en ce que**, pour le raccordement de chacune des caméras au câble Fast-Ethernet, ainsi que pour le raccordement des câbles respectifs au commutateur de signal vidéo, est prévu un système de prise pour câble, répondant au standard RJ-45.

17. Système de surveillance vidéo selon l'une des revendications précédentes, **caractérisé en ce que** le circuit de décodage de signal vidéo comprend :
- un circuit d'extraction, pour la récupération de l'affectation temporelle horizontale et verticale issue du signal de sortie (MO) multiplexé du commutateur de signal vidéo (MUX) et la génération de signaux de synchronisation sur la base d'une fenêtre de signal limitée temporellement à partir du signal vidéo devant être décodé, qui ne soit pas supérieure à la durée de la suite d'impulsions de changement de trames entre les demi-images respectives.

18. Système de surveillance vidéo selon l'une des revendications précédentes, **caractérisé en ce que** le circuit de décodage vidéo est réalisé pour effectuer l'extraction de la synchronisation horizontale en un mode Fast Locking.

19. Système de surveillance vidéo selon l'une des revendications précédentes, **caractérisé en ce que**
- les signaux vidéo produits par les caméras vidéo (C1, ..., Ci) respectives sont des signaux vidéo couleur, contenant des rafales pour la récupération da la sous-porteuse de chrominance ;
- et le circuit de décodage de signal vidéo est réalisé pour extraire la sous-porteuse de chrominance en un mode Fast Locking.

20. Système de surveillance vidéo selon l'une des revendications précédentes, **caractérisé en ce que**
- les caméras vidéo (C1, ..., Ci) respectives sont réalisées pour produire des signaux vidéo couleur contenant des rafales pour la récupération de la sous-porteuse de chrominance, sachant qu'entre les demi-images respectives est prévu un intervalle de temps d'une longueur de plusieurs lignes, intervalle pendant lequel aucune rafale n'est générée ; et
- le circuit de décodage vidéo est réalisé pour extraire, à partir de la rafale de la sous-porteuse de chrominance contenue dans le signal vidéo décodé, une porteuse de chrominance, pour le décodage de l'information de couleur, sachant que le nombre de lignes successives, qui influe sur la récupération de la sous-porteuse de chrominance, n'est pas supérieur à l'intervalle de temps entre deux demi-images, dans lequel il n'y a aucune rafale.

21. Système de surveillance vidéo selon l'une des revendications précédentes, **caractérisé en ce que** le dispositif d'enregistrement de signal vidéo est réalisé pour enregistrer, à l'état compressé ou décompressé, un signal vidéo décodé, de façon numérique, sur une bande vidéo ou sur un disque dur, un CD-ROM ou un DVD.

22. Système de surveillance vidéo selon l'une des revendications précédentes, **caractérisé en ce que** le générateur de cadencement (CLK, FD1, FD2) est réalisé
- pour générer l'impulsion de remise à l'état initial avec une période choisie de manière que le multiple par 1/N dé celle-ci soit situé entre les limites de l'intervalle de tolérance donnée pour la période de succession des impulsions de changement de lignes et d'images, sachant que N est un nombre entier et est supérieur ou égal à 1 ; et
- le circuit de décodage de signal vidéo est réalisé de manière à tramer les impulsions contenues dans le signal vidéo à une rapidité telle qu'il peut décoder les signaux vidéo, qui présentent des déformations temporelles de la grandeur du multiple par N de l'intervalle de tolérance donné.

23. Système de surveillance vidéo selon la revendication 22, **caractérisé en ce que** les caméras vidéo (C1, ..., Ci) sont réalisées pour générer des signaux vidéo à la norme PAL, et N est égal à 1 ou 2.

24. Système de surveillance vidéo selon la revendication 22; **caractérisé en ce que** les caméras vidéo (C1, ..., Ci) sont réalisées pour générer des signaux vidéo selon la norme NTSC, et N est égal à 1, 2, 3 ou 4.

25. Dispositif d'enregistrement de signaux vidéo (VR), pour enregistrer un signal vidéo (MO) émis par un commutateur de signal vidéo (MUX) d'un système de surveillance vidéo selon l'une des revendications 1 à 24, présentant une succession cyclique de parties limitées de signaux vidéo issus des caméras vidéo (C1, C2, ..., Ci) respectives du système de surveillance vidéo,
où les parties limitées de signal vidéo présentent des distorsions temporelles qui sont provoquées par des écarts entre les périodes des successions d'impulsions de changement de lignes et d'images produites par les caméras respectives, par rapport à la période nominale (PS),
avec un circuit de décodage de signal vidéo pour le décodage du signal vidéo (MO) fourni par le commutateur de signal vidéo, circuit réalisé de manière à tramer les impulsions de changement de lignes contenues dans le signal vidéo (MO), à une rapidité telle qu'il peut décoder le signal vidéo (MO) fourni par le commutateur de signal vidéo (MUX) avec les parties limitées de signal vidéo, distordues temporellement, des caméras vidéo respectives.
